# EUROPÄISCHE PATENTANMELDUNG

(11) **EP 4 773 027 A1**
(43) Veröffentlichungstag der Anmeldung: **08.07.2026**
(21) Anmeldenummer: 26150064.9
(22) Anmeldetag: 02.01.2026
(51) Int. Cl.: G06F 21/31, G06F 21/62, G06F 21/64, G06F 21/34, H04L 9/40

(54) **VERFAHREN UND SYSTEM ZUM EXPORT EINES VON EINEM ID TOKEN ERZEUGTEN SCHLÜSSELS**

(30) Priorität: 06.01.2025 DE 102025000182
(71) Anmelder: Bundesdruckerei GmbH, 10969 Berlin (DE)
(72) Erfinder: Morgner, Frank, 10969 Berlin (DE); Bastian, Paul, 10969 Berlin (DE)

(57) **Zusammenfassung**

Die Erfindung betrifft ein Verfahren und ein elektronisches System zum Exportieren eines von einem ID Token (110) erzeugten Schlüssels. Das Verfahren umfasst ein Aufbauen (S201) eines sicheren Kanals (101, 102) zwischen einem ersten Computersystem (140) und dem ID Token (110), ein Erzeugen (S203) oder Importieren eines Nutzschlüssels (1141) durch das ID Token (110), ein Erzeugen (S205) eines Kapselschlüssels (1142) durch das ID Token (110), wobei der Kapselschlüssel (1142) erzeugt wird durch Verschlüsselung des vom ID Token (110) generierten Nutzschlüssels (1141) mit einem in einem sicheren Speicherbereich (113) des ID Tokens (110) gespeicherten Verkapselungsschlüssel (1131) und ein Exportieren (S207) des Kapselschlüssels (1142) von dem ID Token (110) an das erste Computersystem (140).

## Beschreibung

Die vorliegende Erfindung betrifft ein Verfahren und System zum Exportieren eines von einem ID Token erzeugten Schlüssels sowie Verfahren und Systeme die diese exportierten Schlüssel zu Zwecken der Verschlüsselung, Schlüsseleinigung, Signatur und/oder Nutzerauthentifizierung verwenden.

Der Personalausweis unterstützt die sogenannte Restricted Identification (siehe BSI Technische Richtlinie 03110), welche ein dienst- und kartenspezifisches Merkmal erzeugt, das zur Wiedererkennung und somit zu einer Dienstanbieterspezifischen Nutzerauthentifizierung genutzt werden kann. Hierbei muss für jeden Dienstanbieter ein eigenes Merkmal, also eine eigene Kennung bzw. ein eigener Schlüssel generiert werden, was bei den geringen Speicherkapazitäten des Personalausweises und auch anderer Chipkarten, sowie möglichen Memoryeffekten im persistenten Speicher von Chipkarten bei der zunehmenden Anzahl von Dienstanbietern problematisch ist.

Weiterhin erlaubt die eSign-Funktion des Personalausweises das Generieren und Verwenden eines statischen Signaturschlüssels. Dieser Schlüssel ist jedoch eindeutig der jeweiligen Chipkarte zugeordnet und kann somit zum Tracking, bzw. der Erstellung eines Bewegungsprofils des Karteninhabers verwendet werden, was aus Datenschutzgründen nicht ideal ist.

Der Erfindung liegt daher die Aufgabe zugrunde, weitere, verbesserte Möglichkeiten zur elektronischen Identifikation unter Verwendung von Chipkarten bereit zu stellen.

Die Aufgabe wird durch die Gegenstände der unabhängigen Patentansprüche gelöst. Bevorzugte Ausführungsformen der Erfindung ergeben sich aus den in den Unteransprüchen genannten Merkmalen und weiterhin auch aus der vorliegenden Offenbarung als Ganzes.

Nachfolgend werden zunächst Begriffe, die im Kontext dieser Anmeldung verwendet werden, definiert.

Der Begriff "Token" bezeichnet vorliegend jegliche Realisierung eines tragbaren Mikrocomputers mit einer externen Schnittstelle, einem Mikroprozessor und einem nicht-flüchtigen Speicher, der mittelbar über die externe Schnittstelle einer äußeren Lese- und/oder Schreiboperation zugänglich ist.

Unter einem "Token", welches auch als "ID-Token" bezeichnet wird, wird hier insbesondere ein tragbares elektronisches Gerät verstanden, welches beispielsweise zumindest einen geschützten elektronischen Datenspeicher zur Speicherung von Daten und eine Kommunikations-Schnittstelle zum Auslesen der Daten aufweist. Zumindest ein Speicherbereich des Speichers ist beispielsweise geschützt, um zu verhindern, dass in dem Speicherbereich gespeicherte Daten in unerlaubter Weise verändert oder ohne die dafür erforderliche Berechtigung ausgelesen werden. Mit anderen Worten kann auf den Speicherbereich nur dann zugegriffen werden, wenn eine hierzu erforderliche Zugriffberechtigung gegeben ist.

Das Token kann eine Kommunikationsschnittstelle aufweisen und einen Mikroprozessor, der über einen internen Datenbus mit dem geschützten Speicherbereich verbunden ist. Ein externer Zugriff auf den geschützten Speicherbereich über die Kommunikationsschnittstelle kann nur über den Prozessor erfolgen, nachdem der Prozessor durch Ausführung eines Programms das Vorliegen der entsprechenden Zugriffberechtigung geprüft hat. Der Speicher umfasst beispielsweise einen Arbeitsspeicher und einen persistenten Speicher, wobei der Arbeitsspeicher beispielsweise nach Beendigung einer Programmausführung gelöscht wird, während im persistenten Speicher Daten auch über die Beendigung des Programms hinaus gespeichert werden können.

Die Kommunikationsschnittstelle ist somit eine Schnittstelle, über die Daten empfangen und gesendet werden können, wobei die Kommunikationsschnittstelle kontaktbehaftet oder kontaktlos konfiguriert sein kann, beispielsweise nach einem RFID- und/oder NFC-Standard. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Insbesondere kann es sich bei dem Token um einen USB-Stick, eine Chipkarte oder ein anderes Secure Element (SE), wie beispielsweise von Global Platform (www.globalplat-form.org) spezifiziert, handeln oder um ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise wie Zugangskarten, in die ein Datenspeicher zur Speicherung von Daten integriert ist. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Der Begriff "externe Schnittstelle" wird hinsichtlich eines Tokens verwendet für jede technische Einrichtung zum Austausch von digital codierten Daten zwischen dem Token und einer davon getrennten Datenverarbeitungseinrichtung. Beispiele für externe Schnittstellen eines Tokens sind die aus den Bank- und Kreditkarten bekannten Kontaktfelder und die aus dem Bereich der elektronischen Ausweisdokumente bekannte RFID-Schnittstellen zur hochfrequenten drahtlosen Signalübertragung.

Der "Adressbereich" eines nicht-flüchtigen Speichers eines Tokens ist die Menge der Binärbezeichner, nämlich der Adressen, mit denen der Mikroprozessor des Tokens die Einheiten des nicht-flüchtigen Speichers in Zugriffsoperationen auswählt. Typisch werden die Adressen vom Mikroprozessor auf einem Register und/oder über einen Befehlsparameter gebildet. In Token ohne Speicherverwaltungseinheit (Memory Management Unit, MMU) erscheinen die Adressen direkt auf dem Datenbus. Dies ist jedoch nicht vorausgesetzt. Auch im Fall einer Virtualisierung des Speicherzugriffs durch eine Speicherverwaltungseinheit und/oder einer Verwürfelung (engl.: scrambling) der Speicherzugriffe wird vorliegend als Adressbereich die Menge der virtuellen und/oder verwürfelten Adressen verstanden, mit denen ein tatsächlich verfügbares Speicherelement auf der Stufe der Prozessorlogik für einen Zugriffsbefehl auswählbar ist.

Als "Datei" wird vorliegend eine selbstbeschreibende strukturierte oder strukturierbare Zusammenstellung von Daten bezeichnet. Der zur Beschreibung der Datei dienende Teil der Daten sind Metadaten. Der darüber hinaus gehende Teil der Daten sind Nutzdaten.

Als "Verweisstruktur" wird eine strukturierte oder strukturierbare Zusammenstellung von Adressen mit Verweisen auf andere Daten bezeichnet.

Als "Zugriffslogik" wird ein abstraktes, programmtechnisch realisierbares Ordnungsschema für den Zugriff auf Daten in einem Speicher verstanden. In diesem Sinne ist eine Verweisstruktur eine besondere Zugriffslogik, nämlich eine in den gespeicherten Daten abgebildete Zugriffslogik. Andere Realisierungen einer Zugriffslogik können prozedural oder objektorientiert sein.

Als "Dateisystem" wird eine zum Zeitpunkt der Herausgabe des Tokens bereits wenigstens im Ansatz angelegte Struktur aus Verwaltungsdaten im nicht-flüchtigen Speicher angesehen. Typische Token sind zum Zeitpunkt der Herausgabe mit programmtechnischen Einrichtungen ausgestattet, die eine Erweiterung oder allgemeine Veränderung des Dateisystems unter Beibehaltung des unterliegenden abstrakten Ordnungsschemas zu späteren Zeitpunkten erlauben. Wiederum typisch werden diese programmtechnischen Einrichtungen als Teile einer hardwarespezifischen programmtechnischen Grundausrüstung bereitgestellt, die auch als Chipkartenbetriebssystem bezeichnet wird. Für weitere Einzelheiten zum Aufbau und insbesondere zur Zugriffslogik in typischen Dateisystemen für Token wird auf die Norm ISO/IEC 7816-4 verwiesen.

Unter einem "Terminal" wird hier ein elektronisches Gerät verstanden, welches ein Lesegerät umfasst, das einen Lesezugriff und/oder einen Schreibzugriff auf das Token ermöglicht, beispielsweise in Form eines sogenannten Chipkartenterminals. Das Terminal mit dem Lesegerät kann einen integralen Bestandteil eines Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln. Das Lesegerät kann mit einer kontaktlosen und/oder kontaktbehafteten Schnittstelle zum Datenaustausch mit einem Token ausgestattet ist.

Beispielsweise kann auch ein mobiles Endgerät, wie ein Smartphone, als Kartenlesegerät verwendet werden. Hierzu muss das mobile Endgerät über eine Schnittstelle zum koppeln mit dem ID Token verfügen. Dies ist beispielsweise bei Smartphones mit NFC-Technologie der Fall. Unter Verwendung des NFC-Chips im Smartphone kann eine Verbindung mit einem ID Token, beispielsweise einem Personalausweis hergestellt werden. Dies ist im Rahmen der eID-Funktion des Personalausweises und der zugehörigen AusweisApp implementiert. Bei der eID wird unter Verwendung des EAC Protokolls eine Verbindung zwischen dem Personalausweis und einem entfernten Server unter Verwendung der NFC-Schnittstelle des Smartphones hergestellt. Alternativ ist auch eine derartige Verbindung unter Verwendung des BAC Protokolls möglich. Weiterhin kann auch unter Verwendung des PACE Protokolls eine direkte Verbindung zwischen einem Endgerät und einem Personalausweis hergestellt werden.

Eine "Wallet" ist eine Smartphone-App, die es erlaubt, sicherheitsrelevante und/oder private Daten, beispielsweise Zugangsdaten, an einem zentralen Ort zu speichern. Die in einer Wallet gespeicherten Daten werden durch ein Master-Passwort, auch Masterkey genannt, gesichert.

Nach Ausführungsformen weist der ID-Token keine eigene Energieversorgung auf. Als Energiequelle kann vielmehr eine Vorrichtung zum "Ernten" (energy harvesting) von Energie dienen, welche von dem Terminal an das ID Token übertragen wird, wie beispielsweise eine RFID-Antenne.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystemen dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikates, des sogenannten Wurzelzertifikats, und des durch dieses zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Unter einer "Dokumenten-PKI" wird hier eine public key infrastructure (PKI) verstanden, die zur Erstellung von Zertifikaten für ID-Token, also Dokumente, dient, wobei die Zertifikate zur Prüfung der Authentizität des betreffenden ID-Tokens verwendet werden.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem privaten Schlüssel, welcher zur Verschlüsselung von Daten verwendet wird und im Regelfall geheim gehalten werden muss, und einem öffentlichen Schlüssel, welcher an Dritte, beispielsweise an einen Dienstanbieter und/oder einen ZDA, weitergegeben werden darf. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen.

Bei symmetrischen Schlüsseln verwenden beide Teilnehmer des entsprechenden symmetrischen Kryptosystems denselben Schlüssel. Bei manchen symmetrischen Verfahren sind die beiden Schlüssel nicht identisch, aber können leicht auseinander berechnet werden. Symmetrische Schlüssel werden beispielsweise zum Berechnen von Message Authentication Codes (MAC) verwendet.

Unter einem "statischen" Schlüssel wird im Folgenden ein kryptografischer Schlüssel bzw. Datenwert verstanden, welcher in einem nichtflüchtigen Speichermedium gespeichert ist und für mehr als nur einer Sitzung Verwendung finden kann. Im Gegensatz dazu werden "ephemere" Schlüssel, d.h. temporäre kryptografischer Schlüssel bzw. Datenwerte, nur für eine Sitzung generiert und nicht permanent gespeichert, sodass sie in einer weiteren Sitzung nicht mehr verwendet werden können.

Unter einem "statischen" Zertifikat wird im Folgenden ein digitales Zertifikat verstanden, welches für mehr als nur eine Sitzung Verwendung finden kann. Ein statisches Zertifikat kann beispielsweise einen statischen öffentlichen Schlüssel umfassen und mittels eines statischen privaten Schlüssels signiert sein. Im Gegensatz dazu werden "ephemere" Zertifikate mittels temporärer Schlüssel nur für eine Sitzung generiert, sodass sie in einer weiteren Sitzung nicht mehr verwendet werden können.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" oder "elektronische Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem einem Zertifikat zugeordneten privaten Schlüssel eines kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Ein erster Aspekt der Erfindung betrifft ein Verfahren zum Exportieren eines von einem ID Token erzeugten Schlüssels. Das Verfahren umfasst die folgenden Schritte:
- Aufbauen eines sicheren Kanals zwischen einem ersten Computersystem und dem ID Token;
- Erzeugen eines Nutzschlüssels durch das ID Token, oder Importieren, durch das ID Token von dem ersten Computersystem, eines extern erzeugten Nutzschlüssels;
- Erzeugen eines Kapselschlüssels durch das ID Token, wobei der Kapselschlüssel erzeugt wird durch Verschlüsselung des vom ID Token erzeugten Nutzschlüssels mit einem in einem sicheren Speicherbereich des ID Tokens gespeicherten Verkapselungsschlüssel;
- Exportieren des Kapselschlüssels von dem ID Token an das erste Computersystem.

In dem beschriebenen Verfahren wird zunächst ein sicherer Kanal zum Austausch von Daten und/oder Informationen zwischen dem ID Token und dem ersten Computersystem aufgebaut. Für den Aufbau eines sicheren Kanals wird beispielsweise eine gegenseitige Authentisierung verwendet, die beispielsweise den Austausch von Informationen gemäß des PACE Protokolls oder alternativ gemäß des BAC oder EAC Protokolls umfasst.

Das beschriebene ID Token ist hierbei beispielsweise eine Chipkarte oder ein digitales Sicherheitsdokument, beispielsweise ein Personalausweis, Reisepass oder eine andere Chipkarte die zur Identifikation verwendet werden kann.

Das erste Computersystem kann beispielsweise ein Lesegerät für Chipkarten sein oder ein Computer mit einer Schnittstelle, die mittels installierter Software eine Verbindung zum ID Token herstellen kann. Beispielsweise kann es sich bei dem ersten Computersystem um ein mobiles Endgerät wie ein Smartphone mit NFC Technologie und einer entsprechenden App (wie beispielsweise der AusweisApp) handeln, alternativ um einen PC mit Kartenlesegerät und entsprechender Software oder um ein Terminal zum Auslesen von Daten einer Chipkarte. Das erste Computersystem kann auch mehrere Komponenten umfassen, beispielsweise ein Gerät, das eine Schnittstelle zum Verbindungsaufbau zum ID Token aufweist, während ein weiteres Gerät die sicherheitsrelevante Software umfasst und/oder entsprechende Signaturen.

Als sicherer Kanal wird hierbei eine Datenverbindung betrachtet, die mittels etablierter, als sicher erachteter und/oder zertifizierter Protokolle hergestellt wurde. Beispielsweise werden Verbindung unter Verwendung der BAC, EAC oder PACE Protokolle als sichere Kanäle erachtet.

Nach dem Aufbau des sicheren Kanals zwischen dem ID Token und dem ersten Computersystem wird bei dem beschriebenen Verfahren ein Nutzschlüssel durch das ID Token erzeugt oder es wird der Nutzschlüssel durch das ID Token von dem ersten Computersystem importiert. Der Nutzschlüssel ist beispielsweise ein digitaler Schlüssel, der direkt zum Verschlüsseln oder Entschlüsseln von Daten verwendet werden kann. Alternativ kann der Nutzschlüssel auch ein Seed-Schlüssel sein, aus dem ein digitaler Schlüssel, der zum Verschlüsseln oder Entschlüsseln von Daten verwendbar ist, durch ein deterministisches Verfahren berechnet werden kann.

Nach der Erzeugung oder des Imports des Nutzschlüssels erzeugt das ID Token in einem weiteren Verfahrensschritt einen Kapselschlüssel. Der Kapselschlüssel wird dabei erzeugt durch Verschlüsselung des Nutzschlüssels unter Verwendung eines Verkapselungsschlüssels, der im sicheren Speicherbereich des ID Tokens gespeichert ist. Der Verkapselungsschlüssel kann beispielsweise ein für das ID Token generierter AES-256 Schlüssel sein. Verfahren zur Verschlüsselung von Schlüsseln werden auch als "Key Wrapping" bezeichnet.

Der so erzeugte Kapselschlüssel wird dann vom ID Token an das erste Computersystem exportiert, unter Verwendung des sicheren Kanals.

Durch das beschriebene Verfahren ist es somit möglich einen durch das ID Token gesicherten Schlüssel außerhalb des ID Tokens, beispielsweise in dem ersten Computersystem oder in einem Speicher, an den das erste Computersystem den Kapselschlüssel exportiert hat, zu speichern. Dadurch werden die Speicherplatzprobleme des ID Tokens umgangen und es können auch für verschiedene Anwendungen immer wieder neue Kapselschlüssel erzeugt werden, wodurch das Risiko einer Nachverfolgung und Erstellung von Bewegungsprofilen durch Schlüssel des ID Tokens reduziert wird.

Bei Erzeugung des Nutzschlüssels durch das ID Token wird zusätzliche Sicherheit dadurch erreicht, dass der Nutzschlüssel zu keinem Zeitpunkt des beschriebenen Verfahrens außerhalb des ID Tokens abgelegt wird.

Wenn der Nutzschlüssel vom ersten Computersystem importiert wird, so ist der Nutzschlüssel zwar zumindest temporär außerhalb des ID Tokens verfügbar, es kann aber auf dem ersten Computersystem sofort wieder gelöscht werden. Die Option des Imports eines Nutzschlüssels kann vor allem zum Backup eines Schlüssels, der in einem Cloud-basierten High-Security Module gespeichert ist, verwendet werden, beispielsweise für einen Schlüssel einer Cloud-basierten Wallet.

Das ID Token kann hierbei eine Chipkarte oder ein digitales Sicherheitsdokument sein. Ein solches verfügt beispielsweise über einen sicheren Speicher, einen Mikroprozessor und über Möglichkeiten zur Schlüsselgenerierung, beispielsweise in Form eines Schlüssel- und/oder Zufallszahlengenerators.

Das erste Computersystem kann hierbei weiterhin ein digitales Endgerät sein, welches eine virtuelle Wallet umfasst, in der der Kapselschlüssel gespeichert werden kann.

In einer Ausführungsform werden die Schritte des Erzeugens des Nutzschlüssels und des Erzeugens des Kapselschlüssels im Arbeitsspeicher des ID Tokens durchgeführt und das Verfahren kann, nach dem Exportieren des Kapselschlüssels als weiteren Verfahrensschritt das Löschen des Arbeitsspeichers, beispielsweise das Löschen des erzeugten Nutzschlüssels und des erzeugten Kapselschlüssels, umfassen. Auch wird nach dem Exportieren des Kapselschlüssels vorzugsweise die Verbindung, d.h. der sichere Kanal, zwischen dem ID Token und dem ersten Computersystem beendet.

Das Ausführen der Verfahrensschritte im Arbeitsspeicher des ID Tokens hat den Effekt das kein Schreibzugriff auf den persistenten Speicher des ID Tokens erfolgen muss und somit Memory-Effekte im persistenten Speicher vermieden werden. Weiterhin werden durch das Ausführen der Schritte im Arbeitsspeicher und das anschließende Löschen des Nutzschlüssels und des Kapselschlüssels die knappen Ressourcen des ID Tokens geschont.

In einem Beispiel wird als Nutzschlüssel ein Post-Quanten-Kryptographie (Post-Quantum-Cryptography, PQC) Schlüssel verwendet.

Ein Post-Quanten-Schlüssel hat, im Gegensatz zu einigen standardmäßig verwendeten kryptographischen Verfahren wie RSA oder ECC die Eigenschaft, dass für ihn kein Quantencomputer-basierter Algorithmus bekannt ist, mit dem der Post-Quanten-Schlüssel auf effiziente Art und Weise aus den öffentlich verfügbaren Daten bestimmt werden kann. Somit entsteht durch die Verwendung eines PQC-Schlüssels eine erhöhte Sicherheit, die auch für den Fall kryptographisch relevanter Quantencomputer gewährleistet werden kann. Da digitale Token teilweise sehr lange Laufzeiten von 5 Jahren, 10 Jahren oder mehr haben, ist die Sicherheit der verwendeten Schlüssel von großer Bedeutung.

Ebenfalls kann der Verkapselungsschlüssel ein Post-Quanten-Kryptographie Schlüssel sein, beispielsweise ein symmetrischer PQC-Schlüssel, beispielsweise ein AES-256 Schlüssel.

In einer Ausführungsform ist der Nutzschlüssel ein privater Schlüssel eines asymmetrischen Schlüsselpaars, im Folgenden als privater Nutzschlüssel bezeichnet. In diesem Fall umfasst das beschriebene Verfahren als weiteren Schritte das Erzeugen, durch das ID Token, eines dem privaten Nutzschlüssel zugeordneten öffentlichen Nutzschlüssel, und das Exportieren des öffentlichen Nutzschlüssels an das erste Computersystem.

Alternativ zu einem privaten Schlüssel eines asymmetrischen Schlüsselpaars kann der Nutzschlüssel auch einem Seed-Schlüssel eines privaten Schlüssels eines asymmetrischen Schlüsselpaars entsprechen. Aus dem Seed-Schlüssel kann der private Nutzschlüssel durch ein deterministisches Verfahren berechnet werden. Der Vorteil einer Speicherung des Seed-Schlüssels kann darin bestehen, dass Seed-Schlüssel oft speichereffizienter sind als die daraus berechneten privaten Nutzschlüssel. Im Folgenden wird der Begriff privater Nutzschlüssel und Nutzschlüssel verwendet, diese Begriffe umfassen die Möglichkeit, statt eines direkt zur Verschlüsselung oder Entschlüsselung verwendbaren Schlüssels einen Seed-Schlüssel zu speichern, aus dem der zur Verschlüsselung und Entschlüsselung verwendete Schlüssel deterministisch und somit eindeutig reproduziert werden kann.

Der private und öffentliche Nutzschlüssel können beispielsweise als asymmetrisches Schlüsselpaar von dem ID Token generiert werden. Während der öffentliche Nutzschlüssel ohne weitere Sicherheitsvorkehrungen exportiert werden kann, wird der private Nutzschlüssel, wie oben beschrieben zunächst mit dem Verkapselungsschlüssel verschlüsselt und dann als Kapselschlüssel exportiert.

Der Export eines Kapselschlüssels und zugehörigen öffentlichen Schlüssels hat den zusätzlichen Effekt, dass mit dem öffentlichen Schlüssel Daten verschlüsselt oder Signaturen überprüft werden können, wie nachfolgend beschrieben wird.

Als asymmetrische Schlüsselpaare kommen beispielsweise Schlüsselpaare die basierend auf RSA oder ECC generiert wurden in Frage. Die Generierung solcher Schlüsselpaare durch ein ID Token ist unter Verwendung eines im ID Token enthaltenen Zufallszahlengenerators sowie weiterer Programmlogik die im ID Token implementiert sein kann.

Optional können der private und öffentlichen Nutzschlüssel ein PQC Schlüsselpaar sein, das beispielsweise basierend auf einem der folgenden kryptographischen Verfahren erstellt wurde: gitterbasierte Kryptographie, Hash-basierte Kryptographie, multivariate Polynome, fehlerkorrigierende Codes und/oder supersinguläre elliptische Kurven.

Die Verwendung eines asymmetrischen PQC Schlüsselpaares hat den Vorteil, dass die Schlüssel auf für den Fall der Entwicklung eines kryptographisch-relevanten Quantencomputers nicht auf effiziente Art entschlüsselt werden können.

Ein asymmetrisches Schlüsselpaar welches in Form eines Kapselschlüssels und zugeordneten öffentlichen Schlüssel exportiert wurde kann beispielsweise zur sicheren Übersendung von Daten an das ID Token bzw. an den Nutzer des ID Tokens bzw. den Besitzer der Chipkarte verwendet werden.

Beispielsweise kann das beschriebene Verfahren zur Datenverschlüsselung verwendet werden und dafür weiterhin die folgenden Schritte umfassen:
- Empfangen, durch das erste Computersystem, von unter Verwendung des öffentlichen Nutzschlüssels verschlüsselten digitalen Daten;
- Aufbauen eines erneuten sicheren Kanals zwischen dem ID Token und dem ersten Computersystem;
- Exportieren der verschlüsselten digitalen Daten und des Kapselschlüssels vom ersten Computersystem an das ID Token;
- Entkapseln, durch das ID Token, des Kapselschlüssels unter Verwendung des Verkapselungsschlüssels;
- Entschlüsseln, durch das ID Token, der verschlüsselten digitale Daten unter Verwendung des entkapselten privaten Nutzschlüssels;
- Exportieren, von dem ID Token an das erste Computersystem über den sicheren Kanal, der entschlüsselten digitalen Daten.

Der öffentliche Nutzschlüssel kann verwendet werden, um Daten zu verschlüsseln, beispielsweise von einem weiteren Computersystem an das der öffentliche Nutzschlüssel übersandt wurde oder das den öffentlichen Nutzschlüssel heruntergeladen hat. Vom ersten Computersystem können dann verschlüsselte digitale Daten empfangen werden, die mit dem öffentlichen Nutzschlüssel verschlüsselt wurden. Da die verschlüsselten digitalen Daten zur Entschlüsselung an das ID Token übertragen werden müssen, handelts es sich bei den verschlüsselten digitalen Daten vorzugsweise um kleine Datenmengen, beispielsweise um einen verschlüsselten symmetrischen Schlüssel, einen Message Authentication Code, einen PGP Schlüssel etc.

Die verschlüsselten digitalen Daten und der Kapselschlüssel können nun an das ID Token exportiert werden, vorzugsweise von dem ersten Computersystem unter Verwendung eines sicheren Kanals der vorher zwischen dem ersten Computersystem und dem ID Token aufgebaut werden, beispielsweise unter Verwendung des PACE Protokolls oder einem anderen Protokoll zur gegenseitigen Authentifizierung.

Das ID Token kann dann zunächst den importierten Kapselschlüssel entkapseln, d.h. den Kapselschlüssel entschlüsseln und somit den privaten Nutzschlüssel erhalten, unter Verwendung des im ID Token gespeicherten Verkapselungsschlüssels. Dieses Entkapseln kann beispielsweise im Arbeitsspeicher des ID Tokens durchgeführt werden unter Verwendung des im sicheren Speicherbereich gespeicherten Verkapselungsschlüssels.

Der Verkapselungsschlüssel kann hierbei vorzugsweise ein PQC-sicherer Schlüssel sein, beispielsweise ein AES-256 Schlüssel. Er ist zur Sicherheit beispielsweise in einem nicht-auslesbaren Speicherbereich des ID Tokens abgelegt. Zusätzlich kann der Verkapselungsschlüssel in einem nicht-exportierbaren Speicherbereich abgelegt sein, bzw. für das Auslesen und/oder Exportieren des Verkapselungsschlüssels können weitere Sicherheitsüberprüfungen erforderlich sein.

Der entkapselte private Nutzschlüssel, der dem ursprünglich vom ID Token generierten privaten Nutzschlüssel entspricht, kann dann vom ID Token verwendet werden, um die empfangenen verschlüsselten digitalen Daten zu entschlüsseln. Im Anschluss daran können die entschlüsselten digitalen Daten über den sicheren Kanal an das erste Computersystem übersandt werden.

Auf diese Art wird eine durch das ID Token abgesicherte Übertragung und Entschlüsselung von Daten realisiert. Da das ID Token den Kapselschlüssel und öffentlichen Nutzschlüssel nicht persistent speichern muss, kann eine große Anzahl verschiedener Nutzschlüssel mit ein und demselben ID Token erzeugt und verwendet werden, wodurch die Datensicherheit und der Schutz der persönlichen Daten des Inhabers des ID Tokens erhöht werden.

Beispielsweise kann es sich bei den verschlüsselten digitalen Daten um einen Sitzungsschlüssel oder um ein Passwort handeln. Auch andere Datenarten sind möglich, es müssen lediglich die Ressourcenbeschränkungen des ID Tokens berücksichtigt werden, da die Zwischenspeicherung und Entschlüsselung im Arbeitsspeicher des ID Tokens durchführbar sein sollten.

Eine weitere mögliche Verwendung des im ersten Aspekt beschriebenen Verfahrens ist das Signieren von digitalen Daten oder Nachrichten unter Verwendung eines privaten Kapselschlüssels und zugeordneten öffentlichen Nutzschlüssels. Bei Signieren digitaler Daten sind zwei Fälle zu unterscheiden. Zum einen kann das Signieren in engem zeitlichem Zusammenhang mit der Erzeugung der Nutzschlüssel erfolgen. In diesem Fall wird der aufgebaute sichere Kanal nicht zwischenzeitlich getrennt und die erzeugten Nutzschlüssel werden direkt, noch vor ihrem Export, zum Signieren verwendet. Zum anderen kann das Signieren digitaler Daten unter Verwendung eines zuvor erstellten und bereits exportierten Nutzschlüssels erfolgen. Beide Varianten werden im Folgenden im Detail beschrieben.

In der einen Ausführungsform für das Signieren digitaler Daten kann das eingangs für den ersten Aspekt beschriebene Verfahren noch optional die folgenden Schritte umfassen:
- Exportieren digitaler Daten von dem ersten Computersystem an das ID Token; und, nach dem Erzeugen des privaten Nutzschlüssels durch das ID Token:
- Signieren, durch das ID Token, der digitalen Daten unter Verwendung des privaten Nutzschlüssels;
- Exportieren der signierten digitalen Daten an das erste Computersystem; und
- Übermitteln der signierten digitalen Daten und des öffentlichen Nutzschlüssels an ein weiteres Computersystem.

Hierbei können die digitalen, zu signierenden Daten über den bereits aufgebauten sicheren Kanal von dem ersten Computersystem an das ID Token übertragen werden. Anschließend kann der erzeugte private Nutzschlüssel verwendet werden, um die digitalen Daten zu signieren. Die signierten digitalen Daten können dann vom ID Token an das erste Computersystem und von dort weiter an ein weiteres Computersystem übersandt werden.

In der anderen Ausführungsform für das Signieren digitaler Daten kann das eingangs für den ersten Aspekt beschriebene Verfahren noch optional die folgenden Schritte umfassen:
- Aufbauen eines erneuten sicheren Kanals zwischen dem ersten Computersystem und dem ID Token;
- Exportieren des Kapselschlüssels vom ersten Computersystem an das ID Token;
- Exportieren digitaler Daten von dem ersten Computersystem an das ID Token;
- Entkapseln, durch das ID Token, des Kapselschlüssels unter Verwendung des Verkapselungsschlüssels;
- Signieren, durch das ID Token, der digitalen Daten unter Verwendung des entkapselten privaten Nutzschlüssels;
- Exportieren der signierten digitalen Daten an das erste Computersystem;
- Übermitteln der signierten digitalen Daten und des öffentlichen Nutzschlüssels an ein weiteres Computersystem.

Hierbei wird zunächst ein erneuter sicherer Kanal zwischen dem ersten Computersystem und dem ID Token aufgebaut. Unter Verwendung des sicheren Kanals können dann der Kapselschlüssel und digitale Daten vom ersten Computersystem an das ID Token exportiert werden.

Im ID Token, beispielsweise im Arbeitsspeicher des ID Tokens wird dann der Kapselschlüssel unter Verwendung des Verkapselungsschlüssels, der im sicheren Speicherbereich des ID Tokens gespeichert ist, entkapselt und es wird somit der private Nutzschlüssel in Form eines entkapselten privaten Nutzschlüssels wieder hergestellt.

Im ID Token können dann die digitalen Daten unter Verwendung des entkapselten privaten Nutzschlüssels signiert werden und die dadurch generierten signierten digitalen Daten können dann von dem ID Token an das erste Computersystem exportiert werden. Das erste Computersystem kann nun die signierten digitalen Daten zusammen mit dem öffentlichen Nutzschlüssel an ein weiteres Computersystem übermitteln. Somit kann das weitere Computersystem verifizieren, dass die signierten digitalen Daten tatsächlich dem Inhaber des ID Tokens zugeordnet sind.

Das Entkapseln des Kapselschlüssels und das Signieren der digitalen Daten kann beispielsweise im Arbeitsspeicher des ID Tokens ausgeführt werden. Vorzugsweise werden in den vorab beschriebenen Verfahren die Daten des Arbeitsspeichers des ID Tokens nach einem Export der jeweiligen Daten gelöscht.

Alternativ ist es auch möglich bei beiden beschriebenen Ausführungsformen zum Signieren digitaler Daten, digitalen Daten zu signieren, die sich bereits auf dem ID Token befinden, beispielsweise Identitätsdaten, die auf dem ID Token gespeichert sind. In diesem Fall kann statt dem Export der digitalen Daten an das ID Token ein Schritt zum Laden der digitalen Daten aus dem Speicher des ID Tokens in den Arbeitsspeicher des ID Tokens durchgeführt werden.

Eine weitere Verwendung des im ersten Aspekt genannten Verfahrens ist eine Schlüsseleinigung zwischen dem ersten Computersystem und einem weiteren Computersystem. Bei einer Schlüsseleinigung werden Informationen zwischen zwei Computersystemen so ausgetauscht, dass es möglich ist, zusammengehörige Schlüssel zu erstellen, ohne einen Gemeinschaftsschlüssel übertragen zu müssen.

Hierbei sind wieder zwei Varianten möglich. Zum einen kann eine Schlüsseleinigung basierend auf einem vorab exportierten Kapselschlüssel erfolgen, oder eine Schlüsseleinigung kann basierend auf einem neu erzeugten Nutzschlüssel, bzw. innerhalb des Verfahrens zum Export des Nutzschlüssels erfolgen.

In einer Variante der Schlüsseleinigung wird ein vorab erzeugter Kapselschlüssel verwendet. Hierbei kann das Verfahren des ersten Aspekts weiterhin die folgenden Verfahrensschritte umfassen:
- Empfangen, durch das erste Computersystem, von Schlüsseleinigungsinformation eines weiteren Computersystems;
- Aufbauen eines erneuten sicheren Kanals zwischen dem ID Token (110) und dem ersten Computersystem;
- Exportieren der Schlüsseleinigungsinformation und des Kapselschlüssels vom ersten Computersystem an das ID Token;
- Entkapseln, durch das ID Token, des Kapselschlüssels;
- Erzeugen, durch das ID Token, eines Gemeinschaftsschlüssels unter Verwendung des privaten entkapselten Nutzschlüssels und der Schlüsseleinigungsinformation;
- Exportieren des Gemeinschaftsschlüssels vom ID Token an das erste Computersystem.

Die Schlüsseleinigungsinformationen können hierbei beispielsweise ein öffentlicher Schlüssel des weiteren Computersystems sein. Weiterhin sollte zur Schlüsseleinigung das weitere Computersystem Informationen des ersten Computersystems erhalten, die es dem weiteren Computersystem ebenfalls ermöglichen, den Gemeinschaftsschlüssel zu erstellen. Diese Informationen können beispielsweise in dem zum Kapselschlüssel gehörenden öffentlichen Nutzschlüssel bestehen. Zusätzlich oder alternativ kann auch eine zertifizierte Kennung, wie unten beschrieben verwendet werden, aus der das weitere Computersystem sowohl die Identität des Benutzers des ersten Computersystems als auch den entsprechenden öffentlichen Schlüssel ableiten kann.

In einer weiteren Variante zur Schlüsseleinigung kann das eingangs für den ersten Aspekt beschriebene Verfahren zusätzlich die folgenden Schritte umfassen:
- Empfangen, durch das erste Computersystem, von Schlüsseleinigungsinformation eines weiteren Computersystems.

Weiterhin kann in dieser Variante das beschriebene Verfahren, nach dem Aufbauen des sicheren Kanals zwischen dem ersten Computersystem und dem ID Token weiterhin den folgenden Schritt umfassen:
- Exportieren der Schlüsseleinigungsinformation von dem ersten Computersystem an das ID Token.

Außerdem kann das Verfahren weiterhin, nach dem Erzeugen des privaten Nutzschlüssels durch das ID Token die folgenden Schritte umfassen:
- Erzeugen, durch das ID Token, eines Gemeinschaftsschlüssels unter Verwendung des privaten Nutzschlüssels und der Schlüsseleinigungsinformation;
- Exportieren des Gemeinschaftsschlüssels vom ID Token an das erste Computersystem.

Das erste Computersystem kann optional mehrere Komponenten umfassen, die die verschiedenen Verfahrensschritte untereinander aufteilen können. Hierbei können alle Komponenten lokal angeordnet sein, also sich an einem Ort, beispielsweise innerhalb eines Raumes oder innerhalb eines Computergehäuse befinden. Alternativ können verschiedene Komponenten des ersten Computersystems entfernt zueinander angeordnet sein, d.h. in unterschiedlichen Räumen, Gebäuden oder Städten.

Beispielsweise ist es in einer Ausführungsform möglich, dass das erste Computersystem eine Nutzervorrichtung und eine Zertifizierungsvorrichtung umfasst. Die Nutzervorrichtung umfasst in dieser Ausführungsform eine Kommunikationsschnittstelle zum Datenaustausch mit dem ID Token und die Zertifizierungsvorrichtung umfasst ein Zertifikat, welches als Sicherheitsanker dienen kann und beispielsweise Teil der Public Key Infrastruktur (PKI) ist. In diesem Fall kann das Aufbauen des sicheren Kanals zwischen dem ersten Computersystem und dem ID Token die folgenden Schritte umfassen:
- Aufbauen des sicheren Kanals zwischen der Zertifizierungsvorrichtung und dem ID-Token unter Verwendung der Kommunikationsschnittstelle der Nutzervorrichtung.

Ein derartiger Aufbau eines sicheren Kanals zwischen einer Zertifizierungsvorrichtung und dem ID Token unter Verwendung einer Nutzervorrichtung wird beispielsweise durch die eID-Funktion des Personalausweises implementiert, wobei beispielsweise das Smartphone eines Nutzers die Kommunikationsschnittstelle zum Personalausweis herstellt, die eigentliche sichere Verbindung aber zu einem sicheren Server der PKI, welcher als Zertifikatsserver im Sinne dieser Schutzrechtsanmeldung dient, hergestellt wird. Eine solche Verbindung ist speziell gesichert und verhindert, dass die Nutzervorrichtung direkt auf den Speicher des ID Tokens zugreifen kann.

Unter Verwendung einer Zertifizierungsvorrichtung, die über ein Zertifikat verfügt, mit dem sie Daten zertifizieren kann, ist es möglich weiterhin optional eine zertifizierte Kennung zu erstellen unter Verwendung der folgenden ergänzenden Verfahrensschritte, die beim Exportieren des Kapselschlüssels und des öffentlichen Nutzschlüssels an das erste Computersystem ausgeführt werden können:
- Exportieren des Kapselschlüssels, des öffentlichen Nutzschlüssels und von Identitätsdaten von dem ID Token an die Zertifizierungsvorrichtung über den sicheren Kanal;
- Erstellen, durch die Zertifizierungsvorrichtung, einer zertifizierten Kennung basierend auf dem öffentlichen Nutzschlüssel, den Identitätsdaten und dem Zertifikat der Zertifizierungsvorrichtung;
- Übermitteln, von der Zertifizierungsvorrichtung an die Nutzervorrichtung, der zertifizierten Kennung und des Kapselschlüssels.

In diesem optionalen Verfahren werden zusätzlich zu dem Kapselschlüssel und dem öffentlichen Nutzschlüssel auch noch Identitätsdaten des ID Tokens über den sicheren Kanal an das erste Computersystem, vorzugsweise somit an die Zertifizierungsvorrichtung, exportiert. Die Zertifizierungsvorrichtung kann dann eine zertifizierte Kennung erstellen die Daten des öffentlichen Nutzschlüssels und die Identitätsdaten umfasst und mit dem Zertifikat der Zertifizierungsvorrichtung zertifiziert wurde. Optional kann auch der Kapselschlüssel als Teil der zertifizierten Kennung zertifiziert werden. Die Zertifizierung kann hierbei beispielsweise durch eine Signatur der Zertifizierungsvorrichtung erfolgen, die ihrerseits durch einen öffentlichen Schlüssel der Zertifizierungsvorrichtung überprüfbar ist. Weiterhin können Daten gehasht werden um eine Manipulationssicherheit zu gewährleisten.

Die zertifizierte Kennung kann dann von der Zertifizierungsvorrichtung an die Nutzervorrichtung übermittelt werden. Weiterhin kann auch der Kapselschlüssel von der Zertifizierungsvorrichtung an die Nutzervorrichtung übermittelt werden, falls der Kapselschlüssel nicht in der zertifizierten Kennung umfasst ist. In diesem Fall kann alternativ auch der Kapselschlüssel vom ID Token direkt an die Nutzervorrichtung oder übersandt werden.

Die zertifizierte Kennung stellt somit eine Kapselschlüssel-spezifische Kennung dar, d.h. für jeden privaten Nutzschlüssel der mit dem Verkapselungsschlüssel verkapselt wird kann eine eigene zertifizierte Kennung erstellt werden. Weiterhin stellt die zertifizierte Kennung einen durch die Zertifizierungsvorrichtung garantierten Zusammenhang zwischen dem öffentlichen Nutzschlüssel und den Identitätsdaten her.

In einem weiteren Aspekt dieser Anmeldung wird durch die zertifizierte Kennung eine zusätzliche Möglichkeit zur Nutzerauthentifizierung gegenüber einem zweiten Computersystem geschaffen, wobei das Verfahren zur Nutzerauthentifizierung die folgenden Schritte umfasst:
- Übermitteln der zertifizierten Kennung von der Nutzervorrichtung an das zweite Computersystem;
- Empfangen, durch die Nutzervorrichtung von Verifizierungsdaten, wobei die Verifizierungsdaten durch das zweite Computersystem unter Verwendung der übermittelten zertifizierten Kennung erstellt und an die Nutzervorrichtung übermittelt wurden;
- Aufbau eines sicheren Kanals zwischen der Nutzervorrichtung und dem ID Token;
- Exportieren der Verifizierungsdaten und des Kapselschlüssels von der Nutzervorrichtung an das ID Token;
- Entkapseln, durch das ID Token, des Kapselschlüssels unter Verwendung des Verkapselungsschlüssels;
- Erstellen, durch das ID Token, eines Beweises der Identität auf Basis der Verifizierungsdaten und des entkapselten privaten Nutzschlüssels;
- Exportieren des Beweises der Identität von dem ID Token an die Nutzervorrichtung;
- Übermitteln des Beweises der Identität von der Nutzervorrichtung an das zweite Computersystem.

Wenn die Nutzervorrichtung, die beispielsweise ein digitales Endgerät eines Nutzers sein kann, sich anhand der bei ihr hinterlegten, beispielsweise in einem Speicher oder digitaler Wallet der Nutzervorrichtung, zertifizierten Kennung gegenüber einem zweiten Computersystem ausweisen möchte, so wird zunächst die zertifizierte Kennung von der Nutzervorrichtung an das zweite Computersystem übermittelt. Das zweite Computersystem kann dann unter Verwendung der zertifizierten Kennung Verifizierungsdaten erstellen und diese an die Nutzervorrichtung übermitteln. Die Verifizierungsdaten können hierbei beispielsweise eine unter Verwendung des in der zertifizierten Kennung enthaltenen öffentlichen Nutzschlüssels erstellte "Challenge" sein, bei der von dem zweiten Computersystem generierte zufällige Daten mit dem öffentlichen Nutzschlüssel verschlüsselt werden.

Die Nutzervorrichtung empfängt die Verifizierungsdaten von dem zweiten Computersystem und baut einen sicheren Kanal zum ID Token auf, beispielsweise unter Verwendung des PACE Protokolls, oder durch eine andere sichere Authentifizierung, vorzugsweise unter Verwendung einer PIN oder eines Passworts.

Die Verifizierungsdaten und der Kapselschlüssel werden dann von der Nutzervorrichtung an das ID Token exportiert und das ID Token kann den Kapselschlüssel unter Verwendung des Verkapselungsschlüssels entkapseln und den enkapselten Nutzschlüssel verwenden um auf Basis der Verifizierungsdaten einen Beweis der Identität zu erstellen. Der entkapselte Nutzschlüssel entspricht hierbei dem dem öffentlichen Schlüssel zugeordnetem privaten Nutzschlüssel. Der Beweis der Identität umfasst hierbei einen Beweis, dass die Nutzervorrichtung bzw. ihr Inhaber tatsächlich Zugriff auf das ID Token hat mit dem die zertifizierte Kennung verknüpft ist . Beispielsweise kann es sich bei dem von dem ID Token generierten Beweis der Identität um eine zugehörige "Response" zu der "Challenge" der zweiten Nutzervorrichtung handeln.

Der Beweis der Identität wird dann von dem ID Token an die Nutzervorrichtung exportiert und von der Nutzervorrichtung an das zweite Computersystem übermittelt.

Somit kann das zweite Computersystem die Identität der Nutzervorrichtung verifizieren ohne eine Verbindung mit der Zertifizierungsvorrichtung, die die zertifizierte Kennung erstellt hat, aufbauen zu müssen. Optional kann zwar das Zertifikat der Zertifizierungsvorrichtung verifiziert werden, hierzu könnte aber der öffentliche Schlüssel der Zertifizierungsvorrichtung verwendet werden und es ist somit kein gesicherter Kanal zu der Zertifizierungsvorrichtung notwendig.

Somit wird eine Möglichkeit geschaffen die Identität auch ohne aktuellen Zugriff auf die Zertifizierungsvorrichtung nachzuweisen. Dies ist unter Umständen sogar offline möglich. Weiterhin besteht der Vorteil, dass beliebig viele zertifizierte Kennungen erstellt werden können, beispielsweise eine eigene zertifizierte Kennung für jeden Dienstanbieter. Somit wird der Datenschutz gestärkt ohne die Sicherheit zu kompromittieren. Der Verkapselungsschlüssel des ID Tokens kann somit als eine Art Superschlüssel verstanden werden, der es erlaubt mit dem ID Token diverse andere Schlüssel und zertifizierte Kennungen nach Belieben zu generieren und zu aktivieren, wie ein Masterkey eines virtuellen Schlüsselbunds, bzw. einer digitalen Wallet. Durch die Verwendung der Chipkarte als Masterkey für eine Wallet oder ein digitales Schlüsselbund ist auch eine 2-Faktor-Authentifizierung realisiert, da zur Entschlüsselung sowohl Chipkarte als auch Endgerät vorliegen müssen. Zusätzlich kann zur weiteren Erhöhung der Sicherheit noch eine Passwort oder PIN-Engabe notwendig sein.

Während bisher beispielsweise der Schlüsselexport asymmetrischer Schlüsselpaare und dessen Anwendungen beschrieben wurden, besteht in einer weiteren Ausführungsform auch die Möglichkeit symmetrische Nutzschlüssel zu verkapseln und zu exportieren. Symmetrische Nutzschlüssel können insbesondere verwendet werden um Daten des Nutzers durch ein ID Token abzusichern. Beispielsweise kann ein Nutzschlüssel als Masterkey für eine Verschlüsselung von Passwörtern des Nutzers verwendet werden. In diesem Fall kann das Computersystem beispielsweise durch ein einzelnes Endgerät, wie ein Smartphone realisiert sein.

Ähnlich wie beim Signieren von digitalen Daten, gibt es bei der Verschlüsselung unter Verwendung eines symmetrischen, exportierbaren Nutzschlüssels zwei Möglichkeiten, je nachdem ob die Verschlüsselung in zeitlicher Nähe zur Erzeugung des jeweiligen Nutzschlüssels erfolgt oder nicht.

In einer ersten Variante der Verschlüsselung unter Verwendung eines symmetrischen Nutzschlüssels kann nach dem Aufbau des sicheren Kanals zwischen dem ersten Computersystem und dem ID Token:
- Exportieren digitaler Daten von dem ersten Computersystem an das ID Token; und das Verfahren weiterhin umfassend, nach dem Erzeugen des Nutzschlüssels durch das ID Token:
- Verschlüsseln, durch das ID Token, der digitalen Daten unter Verwendung des erzeugten Nutzschlüssels;
- Exportieren der verschlüsselten digitalen Daten an das erste Computersystem.

In diesem Fall wird der zuvor aufgebaute sichere Kanal beibehalten und die digitalen Daten werden über den bereits existierenden sicheren Kanal an das ID Token exportiert. Der sichere Kanal kann hierbei beispielsweise direkt zwischen einem Endgerät des Nutzers und dem ID Token aufgebaut werden, beispielsweise unter Verwendung des PACE Protokolls.

Die digitalen Daten werden dann vom ID Token unter Verwendung des symmetrischen Nutzschlüssels verschlüsselt und die verschlüsselten Daten werden an das erste Computersystem exportiert.

Alternativ kann die Verschlüsselung unter Verwendung eines vorab erstellen Nutzschlüssels erfolgen, der als Kapselschlüssel auf dem ersten Computersystem oder in einem mit dem ersten Computersystem assoziierten Speicher gespeichert ist.

In dieser Variante umfasst das Verfahren, nach dem Exportieren des Kapselschlüssels von dem ID Token an das erste Computersystem, die folgenden Schritte:
- Aufbauen eines erneuten sicheren Kanals zwischen einem ersten Computersystem und dem ID Token;
- Exportieren des Kapselschlüssels vom ersten Computersystem an das ID Token;
- Exportieren digitaler Daten von dem ersten Computersystem an das ID Token;
- Entkapseln, durch das ID Token, des Kapselschlüssels unter Verwendung des Verkapselungsschlüssels;
- Verschlüsseln, durch das ID Token, der digitalen Daten unter Verwendung des entkapselten Nutzschlüssels;
- Exportieren der verschlüsselten digitalen Daten an das erste Computersystem.

In dieser Variante wird ein neuer sicherer Kanal, beispielsweise unter Verwendung des PACE Protokolls, zwischen dem ID Token und dem ersten Computersystem aufgebaut und der Kapselschlüssel und die digitalen Daten werden an das ID Token exportiert.

Der Kapselschlüssel wird dann entkapselt unter Verwendung des Verkapselungsschlüssels, wodurch der symmetrische Nutzschlüssel regeneriert wird. Die digitalen Daten können dann mit dem entkapselten Nutzschlüssel verschlüsselt und anschließend an das erste Computersystem exportiert werden.

Weiterhin ist es, nach der Verschlüsselung digitaler Daten anhand des ID Tokens wie gerade beschrieben, optional möglich, die folgenden Verfahrensschritte auszuführen:
- Exportieren digitaler Daten von dem ersten Computersystem an das ID Token; und das Verfahren weiterhin umfassend, nach dem Erzeugen des Nutzschlüssels durch das ID Token:
- Verschlüsseln, durch das ID Token, der digitalen Daten unter Verwendung des erzeugten Nutzschlüssels;
- Exportieren der verschlüsselten digitalen Daten an das erste Computersystem.

Auch im Fall der Entschlüsselung kann vorher ein erneuter digitaler Kanal zwischen dem ID Token und dem ersten Computersystem aufgebaut werden, falls kein solcher bereits aktiv ist.

Somit ist eine Entschlüsselung der verschlüsselten digitalen Daten möglich. Bei der Verwendung eines symmetrischen Nutzschlüssels kann die Ver- und Entschlüsselung unter Verwendung des ID Tokens beispielsweise der zusätzlichen Absicherung von im ersten Computersystem verwendeten Passwörtern dienen.

Ein weiterer Aspekt der Erfindung betrifft ein elektronisches System zum Exportieren eines von einem ID Token erzeugten Schlüssels. Das elektronische System umfasst hierbei ein ID Token und ein erstes Computersystem, die wie oben beschrieben definiert sein können.

Das ID Token umfasst einen in einem sicheren Speicherbereich gespeicherten Verkapselungsschlüssel und ist konfiguriert zur Durchführung der folgenden Schritte:
- Aufbauen eines sicheren Kanals zu einem ersten Computersystem;
- Erzeugen oder Importieren eines Nutzschlüssels;
- Erzeugen eines Kapselschlüssels durch Verschlüsseln des Nutzschlüssels mit dem Verkapselungsschlüssel; und
- Exportieren des Kapselschlüssels an das erste Computersystem.

Das erste Computersystem ist konfiguriert zur Durchführung der folgenden Schritte:
- Aufbauen eines sicheren Kanals zu dem ID Token;
- Empfangen des Kapselschlüssels über den sicheren Kanal von dem ID Token; und
- Speichern des Kapselschlüssels.

Optional kann das ID Token weiterhin einen Arbeitsspeicher umfassen und das ID Token kann speziell konfiguriert sein zum Erzeugen des Nutzschlüssels und das Erzeugen des Kapselschlüssels im Arbeitsspeicher und zum Löschen von Daten des Arbeitsspeichers, insbesondere zum Löschen des Nutzschlüssels und des Kapselschlüssels aus dem Arbeitsspeicher nach dem Exportieren des Kapselschlüssels an das erste Computersystem.

Beispielsweise kann der Nutzschlüssel ein privater Nutzschlüssel eines asymmetrischen Schlüsselpaars sein. In diesem Fall kann das ID Token weiterhin konfiguriert sein zum Erzeugen eines dem privaten Nutzschlüssel zugeordneten öffentlichen Nutzschlüssels; und zum Exportieren des öffentlichen Nutzschlüssels an das erste Computersystem.

Optional kann zum Zwecke der Datenverschlüsselung das erste Computersystem weiterhin konfiguriert zum Empfangen von unter Verwendung des öffentlichen Nutzschlüssels verschlüsselten digitalen Daten, zum Aufbauen eines erneuten sicheren Kanals und zum Exportieren der verschlüsselten digitalen Daten und des Kapselschlüssels an das ID Token. Weiterhin kann in diesem Fall das ID Token konfiguriert sein zum Aufbauen des erneuten sicheren Kanals, zum Entkapseln des Kapselschlüssels unter Verwendung des Verkapselungsschlüssels; zum Entschlüsseln der verschlüsselten digitale Daten unter Verwendung des entkapselten Nutzschlüssels, der dem zum öffentlichen Nutzschlüssel gehörenden privaten Nutzschlüssel entspricht, und zum Exportieren der entschlüsselten digitalen Daten an das erste Computersystem.

In einer weiteren optionalen Ausgestaltung, zum Zwecke der Signatur von Daten, kann das erste Computersystem weiterhin, nach dem Aufbau des sicheren Kanals zum ID Token, konfiguriert sein zum Exportieren digitaler Daten an das ID Token; und zum Übermitteln der von dem ID Token empfangenen signierten digitalen Daten und des öffentlichen Nutzschlüssels an ein weiteres Computersystem. Weiterhin kann in diesem Falls das ID Token konfiguriert sein zum Signieren der digitalen Daten unter Verwendung des privaten Nutzschlüssels und zum Exportieren der signierten digitalen Daten an das erste Computersystem

In einer alternativen optionalen Ausgestaltung zum Zwecke der Signatur von Daten kann das erste Computersystem weiterhin konfiguriert sein zum, nach dem Speichern des Kapselschlüssels, Aufbauen eines erneuten sicheren Kanals zum ID Token; Exportieren des Kapselschlüssels an das ID Token; Exportieren digitaler Daten an das ID Token; und Übermitteln der von dem ID Token empfangenen signierten digitalen Daten und des öffentlichen Nutzschlüssels an ein weiteres Computersystem. Weiterhin kann das ID Token, nach dem Exportieren des Kapselschlüssels an das erste Computersystem, konfiguriert sein zum Aufbauen des erneuten sicheren Kanals zum ersten Computersystem; Empfangen des Kapselschlüssels und der digitalen Daten vom ersten Computersystem; Entkapseln des Kapselschlüssels unter Verwendung des Verkapselungsschlüssels; Signieren der digitalen Daten unter Verwendung des entkapselten privaten Nutzschlüssels; und Exportieren der signierten digitalen Daten an das erste Computersystem.

In einer weiteren optionalen Ausgestaltung des elektronischen Systems kann das elektronische System weiterhin ausgestaltet sein zur Schlüsseleinigung, d.h. zum Aushandeln eines gemeinsamen Schlüssels, auch als Gemeinschaftsschlüssel bezeichnet, der von dem ersten Computersystem und einem weiteren Computersystem zur verschlüsselten Kommunikation verwendet werden kann.

Hierzu kann in einer Ausgestaltung das erste Computersystem weiterhin konfiguriert sein zum Empfangen von Schlüsseleinigungsinformation eines weiteren Computersystems; zum Aufbauen eines erneuten sicheren Kanals zu dem ID Token; und zum Exportieren der Schlüsseleinigungsinformation und des Kapselschlüssels an das ID Token. Weiterhin kann in dieser Ausgestaltung das ID Token weiterhin konfiguriert sein zum Entkapseln des Kapselschlüssels; zum Erzeugen eines Gemeinschaftsschlüssels unter Verwendung des privaten entkapselten Nutzschlüssels und der Schlüsseleinigungsinformation; sowie zum Exportieren des Gemeinschaftsschlüssels an das erste Computersystem.

In einer alternativen optionalen Ausgestaltung zum Zwecke der Schlüsseleinigung kann das erste Computersystem weiterhin konfiguriert sein zum Empfangen von Schlüsseleinigungsinformation eines weiteren Computersystems und, nach dem Aufbauen des sicheren Kanals zum ersten Computersystem, zum Exportieren der Schlüsseleinigungsinformation von dem ersten Computersystem an das ID Token.

Weiterhin ist in dieser Ausgestaltung optional das ID Token weiterhin konfiguriert zum, nach dem Erzeugen des privaten Nutzschlüssels, Erzeugen eines Gemeinschaftsschlüssels unter Verwendung des privaten Nutzschlüssels und der Schlüsseleinigungsinformation und zum Exportieren des Gemeinschaftsschlüssels an das erste Computersystem.

Bei den Ausführungsformen zur Schlüsseleinigung kann weiterhin vom ersten Computersystem an das weitere Computersystem der öffentliche Nutzschlüssel, eine Kennung, beispielsweise wie die in dieser Anmeldung beschriebene zertifizierte Kennung oder eine andere Information an das weitere Computersystem übersendet werden, damit das weitere Computersystem ebenfalls den Gemeinschaftsschlüssel erstellen kann.

Optional kann das erste Computersystem eine Nutzervorrichtung und eine Zertifizierungsvorrichtung, wie oben im Kontext des Verfahrens beschrieben, umfassen. Hierbei umfasst die Nutzervorrichtung eine Kommunikationsschnittstelle zum Datenaustausch mit dem ID Token und die Zertifizierungsvorrichtung ist konfiguriert zum Aufbauen des sicheren Kanals zum ID Token unter Verwendung der Kommunikationsschnittstelle der Nutzervorrichtung. Die Nutzervorrichtung kann beispielsweise eine digitale Wallet umfassen und die Zertifizierungsvorrichtung kann durch einen Zertifikatsserver der PKI realisiert sein.

Weiterhin kann das ID Token konfiguriert sein zum Exportieren des Kapselschlüssels, des öffentlichen Nutzschlüssels und von Identitätsdaten an die Zertifizierungsvorrichtung über den sicheren Kanal. In diesem Fall ist die Zertifizierungsvorrichtung weiterhin konfiguriert zum Erstellen einer zertifizierten Kennung basierend auf dem öffentlichen Nutzschlüssel, den Identitätsdaten und einem Zertifikat der Zertifizierungsvorrichtung; und zum Übermitteln, an die Nutzervorrichtung, der zertifizierten Kennung und des Kapselschlüssels.

Ein weiterer Aspekt der Erfindung betrifft ein elektronisches System zur Nutzerauthentifizierung gegenüber einem zweiten Computersystem unter Verwendung der zertifizierten Kennung. Dazu kann optional die Nutzervorrichtung kann weiterhin konfiguriert sein zum
- Übermitteln der zertifizierten Kennung an ein zweites Computersystem;
- Empfangen von Verifizierungsdaten des zweiten Computersystems, wobei die Verifizierungsdaten vom zweiten Computersystem unter Verwendung der zertifizierten Kennung erstellt wurden;
- Aufbau eines sicheren Kanals zum ID Token;
- Exportieren der Verifizierungsdaten und des Kapselschlüssels an das ID Token;
- Übermitteln des Beweises der Identität von der Nutzervorrichtung an das zweite Computersystem.

In diesem Fall ist das ID Token weiterhin konfiguriert zum
- Entkapseln des Kapselschlüssels unter Verwendung des Verkapselungsschlüssels;
- Erstellen eines Beweises der Identität auf Basis der Verifizierungsdaten und des entkapselten privaten Nutzschlüssels;
- Exportieren des Beweises der Identität an die Nutzervorrichtung.

Das zweite Computersystem kann hierbei ein Dienstanbieter sein und auch als Relying Party bezeichnet werden.

Alternativ kann der Nutzschlüssel ein symmetrischer Verschlüsselungsschlüssel sein. In diesem Fall ist bei einer Variante für eine Verschlüsselung unter Verwendung des symmetrischen Nutzschlüssels das Computersystem weiterhin konfiguriert zum Exportieren des Kapselschlüssels und der verschlüsselten digitalen Daten an das ID Token. Außerdem ist das ID Token in diesem Fall weiterhin konfiguriert zum Entkapseln des Kapselschlüssels unter Verwendung des Verkapselungsschlüssels; zum Entschlüsseln der verschlüsselten digitalen Daten unter Verwendung des Kapselschlüssels; und zum Exportieren der entschlüsselten digitalen Daten an das erste Computersystem.

In einer alternativen Variante einer Verschlüsselung unter Verwendung eines symmetrischen Nutzschlüssels ist das erste Computersystem weiterhin, nach Aufbau des sicheren Kanals zum ID Token, konfiguriert zum Exportieren digitaler Daten an das ID Token. In diesem Fall ist das ID Token weiterhin konfiguriert zum, nach dem Erzeugen des Nutzschlüssels Verschlüsseln der empfangenen digitalen Daten unter Verwendung des Nutzschlüssels; und zum Exportieren der verschlüsselten digitalen Daten an das erste Computersystem.

Für eine Entschlüsselung unter Verwendung des symmetrischen Nutzschlüssels ist optional das erste Computersystem weiterhin konfiguriert zum Exportieren des Kapselschlüssels und der verschlüsselten digitalen Daten and das ID Token und das ID Token ist optional weiterhin konfiguriert zum Entkapseln des Kapselschlüssels unter Verwendung des Verkapselungsschlüssels, zum Entschlüsseln der verschlüsselten digitalen Daten unter Verwendung des Kapselschlüssels und zum Exportieren der entschlüsselten digitalen Daten an das erste Computersystem.

Ein symmetrischer Nutzschlüssel kann beispielsweise genutzt werden um Passwörter in einer elektronischen Wallet des Nutzers abzusichern. In diesem Fall kann beispielsweise das Computersystem durch ein einzelnes Endgerät des Benutzers oder eine elektronische Wallet des Benutzers realisiert sein.

Weitere vorteilhafte Wirkungen, beispielhafte Ausgestaltungen des elektronischen Systems sowie der einzelnen durch das ID Token, das erste Computersystem und/oder das zweite Computersystem durchgeführten Verfahrensschritte sind bereits oben im Kontext des erfindungsgemäßen Verfahrens beschrieben und finden für das elektronische System analog Anwendung.

Nochmals mit anderen Worten zusammengefasst, die Erfindung betrifft ein Verfahren und ein elektronisches System zum Exportieren eines von einem ID Token erzeugten Schlüssels. Das Verfahren umfasst ein Aufbauen eines sicheren Kanals zwischen einem ersten Computersystem und dem ID Token, ein Erzeugen oder Importieren eines Nutzschlüssels durch das ID Token, ein Erzeugen eines Kapselschlüssels durch das ID Token, wobei der Kapselschlüssel erzeugt wird durch Verschlüsselung des vom ID Token generierten Nutzschlüssels mit einem in einem sicheren Speicherbereich des ID Tokens gespeicherten Verkapselungsschlüssel (1131) und ein Exportieren des Kapselschlüssels von dem ID Token an das erste Computersystem.

Grundsätzlich wird angemerkt, dass alle Merkmale, die in Bezug auf bestimmte Aspekte oder Ausführungsformen der Erfindung offenbart werden, auch mit anderen Aspekten oder Ausführungsformen der Erfindung technisch sinnvoll kombinierbar sind. Dies gilt auch über unterschiedliche technische Gegenstände und Gegenstandskategorien hinweg. Insbesondere gilt dies auch auszugsweise für einzelne Merkmale, solange hierin nicht explizit darauf hingewiesen wird oder es durch einen technischen Widerspruch offensichtlich ist, dass zwischen bestimmten Merkmalen ein untrennbarer funktional-technischer Zusammenhang besteht, der zur Ausführung der Erfindung beibehalten werden muss.

Im Folgenden wird die Erfindung anhand von Ausführungsbeispielen und deren skizzenhafter Darstellung erläutert. Hierbei zeigen:
- Figur 1A: eine schematische Darstellung einer Ausgestaltung des erfindungsgemäßen elektronischen Systems;
- Figur 1B: eine schematische Darstellung einer weiteren Ausgestaltung des erfindungsgemäßen elektronischen Systems;
- Figur 2: ein Sequenzdiagramm des beschriebenen Verfahrens zum Schlüsselexport;
- Figur 3: ein Sequenzdiagramm einer weiteren Ausgestaltung des beschriebenen Verfahrens zum Schlüsselexport;
- Figur 4: ein Sequenzdiagramm eines Verfahrens zur Datenentschlüsselung unter Verwendung eines exportierten Schlüssels;
- Figur 5A: ein Sequenzdiagramm eines Verfahrens zur Datensignatur unter Verwendung eines exportierten Schlüssels;
- Figur 5B: ein Sequenzdiagramm einer alternativen Ausgestaltung eines Verfahrens zur Datensignatur unter Verwendung eines exportierten Schlüssels;
- Figur 6: ein Sequenzdiagramm eines Verfahrens zur Erstellung einer Nutzerkennung uner Verwendung eines exportierten Schlüssels;
- Figur 7: ein Sequenzdiagramm eines Verfahrens zur Nutzerauthentifizierung unter Verwendung der erstellten Nutzerkennung;
- Figur 8A: ein Sequenzdiagramm eines Verfahrens zur Schlüsseleinigung unter Verwendung eines exportierten Schlüssels;
- Figur 8B: ein Sequenzdiagramm einer alternativen Ausgestaltung eines Verfahrens zur Schlüsseleinigung unter Verwendung eines exportierten Schlüssels;
- Figur 9A: ein Sequenzdiagramm des beschriebenen Verfahrens zur Verschlüsselung unter Verwendung eines exportierten symmetrischen Nutzschlüssels;
- Figur 9B: ein Sequenzdiagramm einer alternativen Ausgestaltung des beschriebenen Verfahrens zur Verschlüsselung unter Verwendung eines exportierten symmetrischen Nutzschlüssels;
- Figur 10: ein Sequenzdiagramm des beschriebenen Verfahrens zur Entschlüsselung von Daten unter Verwendung eines exportierten symmetrischen Nutzschlüssels.

Die vorliegende Anmeldung beschreibt elektronische System, d.h. Computersysteme mit denen die Erzeugung und der Export Chipkarten-generierter Schlüssel möglich ist.

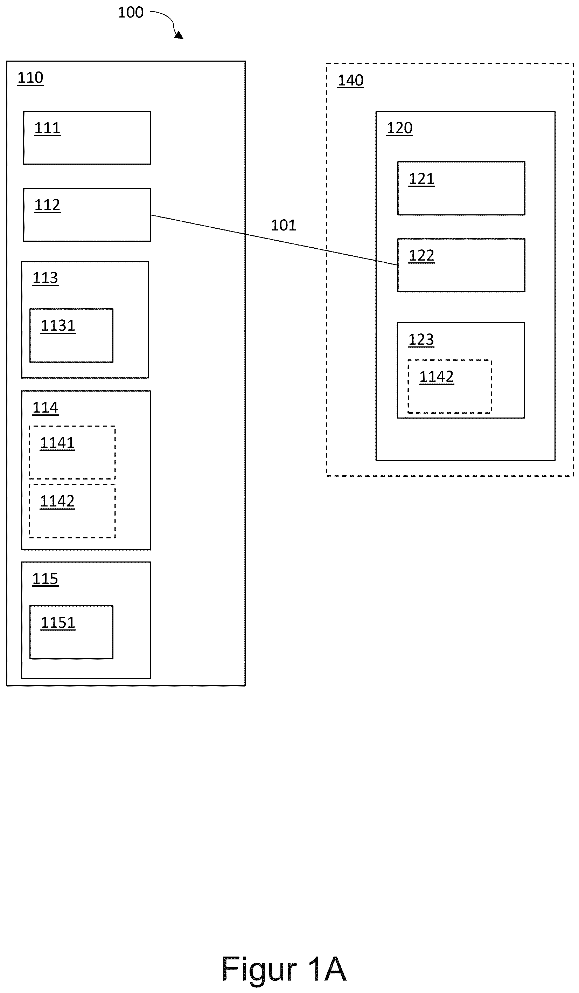

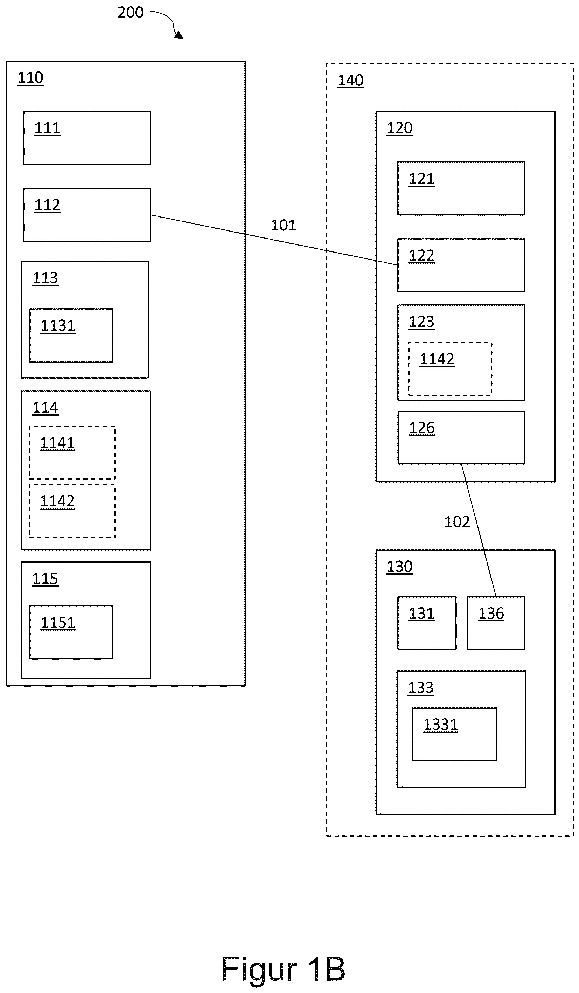

Die Figuren 1A und 1B zeigen jeweils eine Ausgestaltung beschriebener elektronischer Systeme. Im Folgenden werden zunächst die Komponenten der in Figuren 1A und 1B gezeigten elektronischen Systeme eingeführt. Die weiteren Funktionalitäten der Komponenten werden dann im Kontext der weiteren Figuren noch näher spezifiziert.

Das in Figur 1A gezeigte elektronische System 100 und das in Figur 1B gezeigte elektronische System 200 umfasst jeweils eine Chipkarte 110 und ein Computersystem 140. Das Computersystem 140 wiederum umfasst in beiden Ausgestaltungen des elektronischen Systems 100, 200 zumindest ein Endgerät 120, beispielsweise ein Smartphone eines Benutzers oder ein Chipkartenterminal.

Die Chipkarte 110 beinhaltet einen Mikroprozessor 111, eine Kommunikationsschnittstelle 112 und einen Speicher 113. Außerdem beinhaltet die Chipkarte einen Arbeitsspeicher 114 und einen Schlüsselgenerator 115, der wiederum einen Zufallszahlengenerator 1151 umfasst.

Im Speicher 113 der Chipkarte 110 ist in einem sicheren Bereich des Speichers 113 ein Verkapselungsschlüssel 1131 gespeichert. Der Verkapselungsschlüssel 1131 ist beispielsweise ein AES-256 Schlüssel, der für diese Chipkarte 110 erzeugt wurde. Vorzugsweise ist der Verkapselungsschlüssel 1131 nicht exportierbar und/oder nicht auslesbar, bzw. nur unter besonderen Sicherheitsbedingungen auslesbar.

Die Chipkarte 110, die auch als ID Token bezeichnet wird, kann beispielsweise ein elektronisches Sicherheitsdokument, ein Reisepass, Personalausweis, USB-Key etc. sein.

Der Arbeitsspeicher 114 der Chipkarte 110 beinhaltet während der Durchführung der im Folgenden beschriebenen Verfahren temporär einen Nutzschlüssel 1141 und einen Kapselschlüssel 1142, wobei der Kapselschlüssel 1142 dem mit dem Verkapselungsschlüssel 1151 verschlüsselten Nutzschlüssel 1141 entspricht.

Über die Schnittstelle 112 der Chipkarte ist es möglich, die Chipkarte 110 mit einem Endgerät 120 der koppeln. Insbesondere kann somit ein sicher Kanal 101 zwischen der Chipkarte 110 und dem Endgerät 120 aufgebaut werden unter gegenseitiger Authentifizierung unter Verwendung bekannter Chipkartenprotokolle wie beispielsweise PACE, BAC und EAC. Unter Verwendung des sicheren Kanals 101 können Daten von der Chipkarte an das Endgerät übertragen werden und umgekehrt. Insbesondere wird in den im Folgenden beschriebenen Verfahren der Kapselschlüssel von der Chipkarte an das Endgerät übertragen. Auch die umgekehrte Übertragung ist möglich, ebenso wie die Übertragung weiterer Daten, unter Berücksichtigung der begrenzten Speicherkapazitäten der Chipkarte 110.

Das Endgerät 120 kann beispielsweise ein mobiles Endgerät, wie ein Smartphone, sein, ein Lesegerät oder ein Chipkartenterminal. Das Endgerät 120 umfasst einen Prozessor 121 und eine Schnittstelle 122 über die das Endgerät 120 mit der Chipkarte 110 gekoppelt werden kann. Außerdem umfasst das Endgerät 120 einen Speicher 123. Der Speicher 123 des Endgeräts 120 kann ebenfalls den Kapselschlüssel 1142 umfassen, nachdem dieser von der Chipkarte 110 an das Endgerät 120 übertragen wurde.

In der in Figur 1B gezeigten Ausgestaltung des elektronischen Systems 200 umfasst das Computersystem 140 neben dem Endgerät 120 weiterhin einen Server 130, beispielsweise einen Zertifikatsserver 130 der Public Key Infrastruktur.

In dieser Ausgestaltung umfasst das Endgerät 120 weiterhin eine zweite Schnittstelle 126 über die das Endgerät 110 mit dem Zertifikatsserver 130 gekoppelt werden kann. Somit ist eine Datenübertragung zwischen dem Endgerät 120 und dem Zertifikatsserver 130 über einen Kanal 102 möglich. Es ist hierbei möglich, dass unter Verwendung der Schnittstellen 112, 122, 126, 136 ein sicherer Kanal 101, 102 zwischen der Chipkarte 110 und dem Zertifikatsserver 130 unter Verwendung der Schnittstellen 122, 126 des Endgeräts 120 aufgebaut wird. Diese Art von sicherem Kanal ist beispielsweise im Rahmen der eID Funktion des Personalausweises unter Verwendung des EAC Protokolls realisiert.

Der Zertifikatsserver 130 ist vorzugsweise entfernt angeordnet und umfasst einen Prozessor 131 und einen Speicher 133. Im Speicher des Zertifikatsserver 130 ist vorzugsweise ein Zertifikat 1331 abgelegt, welches beispielsweise ein Sicherheitszertifikat sein kann oder eine PKI-Signatur. Der Zertifikatsserver 130 kann auch als Zertifizierungsvorrichtung 130 oder als Server 130 bezeichnet werden oder als ID Server, Issuer etc. Der Zertifikatsserver 130 verfügt über eine Schnittstelle 136 über die der Zertifikatsserver 130 mit dem Endgerät 120 kommunikativ gekoppelt werden kann.

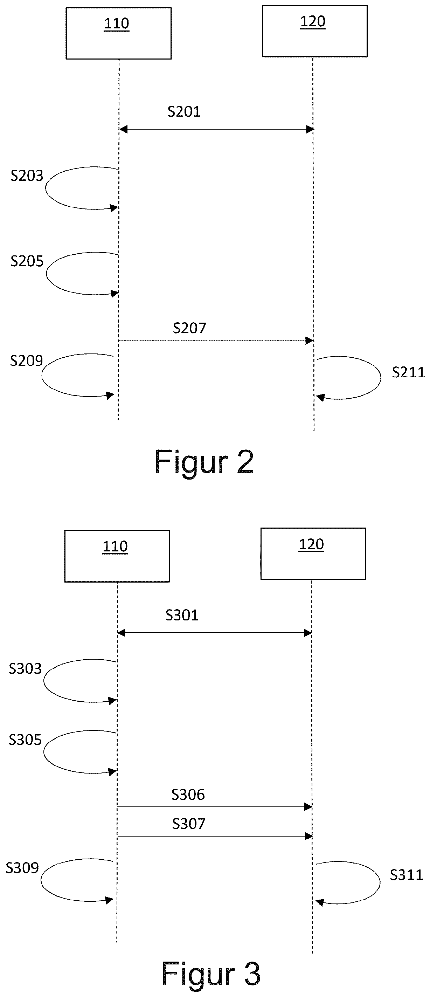

Figur 2 zeigt eine erste Ausgestaltung des beschriebenen Verfahrens zum Export eines mit einer Chipkarte generierten und geschützten Schlüssels.

Zunächst wird in einem Schritt S201 ein sicherer Kanal 101 zwischen einer Chipkarte 110 und einem Endgerät 120 aufgebaut. Der sichere Kanal 101 wird unter Verwendung der Schnittstelle 112 der Chipkarte 110 und der Schnittstelle 122 des Endgeräts 120 aufgebaut. Je nach Art des Endgeräts 120 kann beim Aufbau des sicheren Kanals 101 das PACE Protokoll, dass BAC Protokoll oder das EAC Protokoll zum Einsatz kommen, wie bereits in dieser Anmeldung beschrieben. Auch eine andere Art des Verbindungsaufbaus ist möglich, in Abhängigkeit von den in der Chipkarte 110 und im Endgerät 120 implementierten Kommunikationsprotokolle. Beim Verbindungsaufbau wird vorzugsweise zumindest ein Passwort oder eine PIN verwendet, um die Chipkarte 110 zu entsperren. Auch kann der Aufbau des sicheren Kanals 101 eine gegenseitige Authentifizierung der Chipkarte 110 und des Endgeräts 120 umfassen.

Es ist, wie an anderer Stelle im Detail beschrieben, auch möglich, dass der Aufbau des sicheren Kanals 101, 102 von dem Endgerät 120 initiiert wird, der eigentliche sichere Kanal 101, 102 dann aber zwischen einem Server 130 und der Chipkarte 110 aufgebaut wird, beispielsweise unter Verwendung des EAC Protokolls.

Nach dem Aufbau des sicheren Kanals 101 zwischen dem Endgerät 120 und der Chipkarte 110 generiert die Chipkarte 110 in einem weiteren Schritt S203 einen Nutzschlüssel 1141.

Der Nutzschlüssel 1141 kann beispielsweise von der Chipkarte 110 unter Verwendung des in der Chipkarte 110 enthaltenen Schlüsselgenerators 115 erfolgen, der dafür wiederum den Zufallszahlengenerator 1151 verwendet. Zur Generierung des Nutzschlüssels 1141 können bekannte Verfahren zur Schlüsselgenerierung für asymmetrische oder symmetrische Schlüssel verwendet werden, wie an anderer Stelle in dieser Anmeldung spezifiziert.

Alternativ zur Generierung des Nutzschlüssels 1141 in Schritt S203 durch die Chipkarte 110, kann der Nutzschlüssel 1141 auch durch die Chipkarte 110 importiert werden, vorzugsweise vom ersten Computersystem 120. Diese Variante kann beispielsweise angewandt werden, um ein sicheres Backup für Schlüssel einer Cloud-basierten Wallet zu ermöglichen. In diesem Fall wird der Nutzschlüssel 1141 vom ersten Computersystem 120 nach dem Export an die Chipkarte 110 wieder gelöscht, um das Risiko eines unberechtigten Zugriffs zu minimieren. Die alternative Möglichkeit des Schlüsselimports statt der Erzeugung in der Chipkarte besteht auch für alle nachfolgend beschriebenen Ausführungsformen.

Der erzeugte oder importierte Nutzschlüssel kann direkt zur Verschlüsselung und/oder Entschlüsselung von Daten verwendbar sein, oder der Nutzschlüssel kann ein Seed-Schlüssel sein, aus dem ein digitaler Schlüssel, der zum Verschlüsseln oder Entschlüsseln von Daten verwendbar ist, durch ein deterministisches Verfahren berechnet werden kann.

Der Nutzschlüssel 1141 wird dann in einem weiteren Verfahrensschritt S205 durch die Chipkarte 110 unter Verwendung des Verkapselungsschlüssels 1131 verschlüsselt. Der Verkapselungsschlüssel ist im sicheren Speicherbereich der Chipkarte 110 gespeichert.

Der verkapselte Nutzschlüssel, der auch als Kapselschlüssel 1142 bezeichnet wird, wird dann in einem weiteren Verfahrensschritt S207 an das Endgerät 120 exportiert.

Die Schritte der Erzeugung des Nutzschlüssels 1141 und der Verkapselung des Nutzschlüssels werden im Arbeitsspeicher 114 der Chipkarte 110 ausgeführt. Nach dem Übertragen des Kapselschlüssels 1142 an das Endgerät 120 wird der Arbeitsspeicher 114 in einem weiteren Schritt S209 gelöscht, so dass nach Beendigung des beschriebenen Verfahrens keine zusätzlichen Daten auf der Chipkarte 110 verbleiben. Dadurch kann der Speicherplatz der Chipkarte 110 geschont werden und mögliche Memoryeffekte des persistenten Speichers 113 werden vermieden. Außerdem werden die vom Endgerät 120 empfangenen Daten in einem weiteren Schritt S211 im Speicher 123 des Endgeräts 120 oder in einem externen Speicher, auf den das Endgerät 120 Zugriff hat, gespeichert.

Figur 3 zeigt eine leicht abgewandelte Variante des bereits in Figur 2 beschriebenen Verfahrens. In Figur 3 wird statt eines einzelnen Nutzschlüssels 1141 ein asymmetrisches Nutzschlüsselpaar, bestehend aus einem privaten Nutzschlüssel 1141 und einem öffentlichen Nutzschlüssel, erzeugt.

Das heißt, nach dem Aufbauen S301 des sicheren Kanals zwischen der Chipkarte 110 und dem Endgerät 120 werden von der Chipkarte 110 in Schritt S303 ein privater Nutzschlüssel und ein öffentlicher Nutzschlüssel erzeugt, die zusammen ein asymmetrisches Schlüsselpaar bilden. Auch hierbei ist es alternativ möglich, dass zumindest der private Nutzschlüssel 1141 durch die Chipkarte 110 vom ersten Computersystem 120 importiert wurde.

Der erzeugte oder importierte private Nutzschlüssel kann direkt zur Verschlüsselung und/oder Entschlüsselung verwendbar sein. Alternativ kann der Nutzschlüssel auch ein Seed-Schlüssel sein, aus dem ein digitaler Schlüssel, der zum Verschlüsseln oder Entschlüsseln von Daten verwendbar ist, durch ein deterministisches Verfahren berechnet werden kann.

Bei asymmetrischen Verschlüsselungsverfahren kann ein Seed-Schlüssel beispielsweise durch den Zufallszahlengenerator 1151 der Chipkarte 110 erzeugt werden. Aus dem Seed-Schlüssel kann dann durch ein deterministisches Verfahren der zur Verschlüsselung verwendbare private Schlüssel deterministisch berechnet werden. Hierbei werden, beispielsweise im Fall von RSA oder ECC, zusätzliche Tests durchgeführt, um sicherzustellen, dass der private Schlüssel den Anforderungen des jeweiligen asymmetrischen Verschlüsselungsschemas genügt. Falls der aus dem Seed-Schlüssel erzeugte private Schlüssel nicht den Anforderungen genügt, so werden dieser Seed-Schlüssel und der private Schlüssel verworfen und es wird erneute zufällig ein Seed-Schlüssel erstellt, um daraus einen privaten Schlüssel zu berechnen. Dies kann wiederholt werden, bis ein privater Schlüssel erhalten wird, der den Anforderungen des jeweiligen Verschlüsselungsschemas genügt. Anschließend kann dann beispielsweise aus dem privaten Schlüssel ein zugehöriger öffentlicher Schlüssel berechnet werden.

Danach wird in Schritt S305 der private Nutzschlüssel 1141 von der Chipkarte 110 unter Verwendung des Verkapselungsschlüssels 1131 verkapselt, wie bereits beschrieben. Falls bei der Erstellung des privaten Nutzschlüssels ein Seed-Schlüssel verwendet wurde, aus dem der private Nutzschlüssel mit einem deterministischen Verfahren reproduzierbar ist, so kann statt dem privaten Nutzschlüssel auch der Seed-Schlüssel verkapselt werden, um den Kapselschlüssel zu erzeugen. Dies hat eine zusätzliche Einsparung von Speicherplatz zur Folge, da der Seed-Schlüssel meist kleiner ist als der private Nutzschlüssel. Nach der Verkapselung wird dann in Schritt S306 der öffentliche Schlüssel an das Endgerät exportiert und in Schritt S307 wird der verkapselte private Nutzschlüssel 1141, der wiederum als Kapselschlüssel 1142 bezeichnet wird, an das Endgerät exportiert. Die beiden Exporte können auch simultan oder in umgekehrter Reihenfolge ausgeführt werden.

Nach dem Export des öffentlichen Nutzschlüssels und des Kapselschlüssels 1142 an das Endgerät 120 wird, wie bereits für Figur 2 beschrieben, in Schritt S309 der Arbeitsspeicher 114 der Chipkarte gelöscht und die empfangenen Daten werden in Schritt S311 durch das Endgerät 120 gespeichert. In diesem Fall umfassen die empfangenen Daten den öffentlichen Nutzschlüssel und den Kapselschlüssel 1142 die üblicherweise gemeinsam abgespeichert werden können. Außerdem kann der öffentliche Nutzschlüssel an andere Computersysteme übertragen werden, damit diese anderen Computersysteme den öffentlichen Nutzschlüssel zur Verschlüsselung von Daten für den Nutzer der Chipkarte 110 oder zum Verifizieren von vom Nutzer der Chipkarte 110 signierten Daten verwenden können.

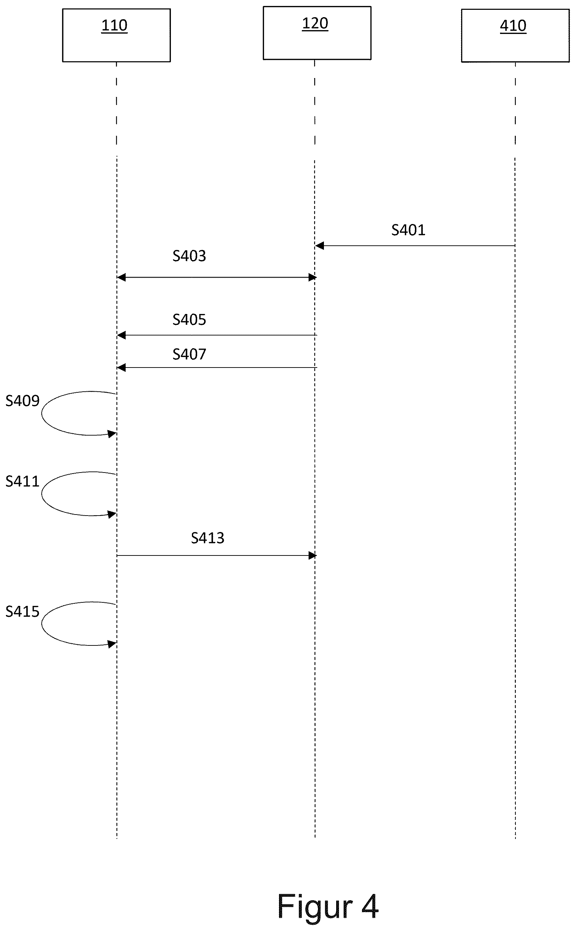

Figur 4 zeigt eine weitere Ausführungsform des erfindungsgemäßen Verfahrens, insbesondere wird in Figur 4 das Entschlüsseln von Daten, die unter Verwendung des im Verfahren gemäß Figur 3 erzeugten öffentlichen Nutzschlüssels verschlüsselt wurden, gezeigt.

Das in Figur 4 gezeigte Verfahren wird somit nach Abschluss des in Figur 3 gezeigten Verfahrens ausgeführt. Das Verfahren in Figur 4 beginnt damit, dass von einem weiteren Computersystem 410, beispielsweise von einem weiteren Endgerät, von einem Server etc. in einem Schritt S401 verschlüsselte Daten, die unter Verwendung des im Verfahren gemäß Figur 3 erzeugten und exportierten öffentlichen Nutzschlüssels verschlüsselt wurden, an das Endgerät 120 übertragen werden. Bei der Übertragung der verschlüsselten Daten von dem weiteren Computersystem 410 an das Endgerät 110 müssen keine besonderen Sicherheitsvorkehrungen eingehalten werden, da die Daten verschlüsselt sind.

Nach dem Empfang der verschlüsselten Daten baut das Endgerät 120 in Schritt S403 erneut einen sicheren Kanal mit der Chipkarte 110 auf. Nach dem Aufbau des sicheren Kanals überträgt das Endgerät in Schritt S405 den Kapselschlüssel 1142 und in Schritt S407 die empfangenen verschlüsselten Daten an die Chipkarte 110. Bei den empfangenen verschlüsselten Daten kann es sich beispielsweise um einen Sitzungsschlüssel handeln oder um andere Daten, deren Größe gering genug ist, so dass die Daten von der Chipkarte 110 verarbeitet werden können.

Die Chipkarte 110 entkapselt nun in Schritt S409 den empfangenen Kapselschlüssel 1142. D.h. der Kapselschlüssel 1142 wird unter Verwendung des im sicheren Speicher 113 des Chipkarte 110 gespeicherten Verkapselungsschlüssels 1131 entschlüsselt.

Unter Verwendung des entschlüsselten Kapselschlüssels, der der zum öffentlichen Nutzschlüssel zugehörige private Nutzschlüssel 1141 ist, können dann in Schritt S411 die empfangenen verschlüsselten Daten entschlüsselt werden.

Anschließend werden die entschlüsselten Daten in Schritt S413 an das Endgerät 120 zur weiteren Verwendung übertragen. Weiterhin wird in Schritt S415 der Arbeitsspeicher des Chipkarte 110 gelöscht, um Ressourcen der Chipkarte zu schonen.

Somit ist eine durch die Chipkarte abgesicherte Entschlüsselung verschlüsselter Daten ohne zusätzlichen Speicheraufwand der Chipkarte 110 möglich.

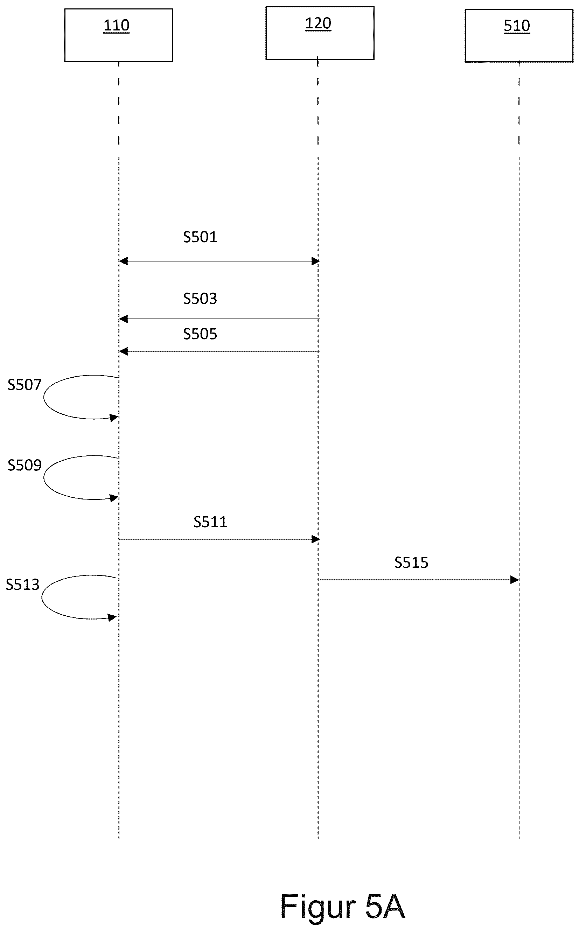

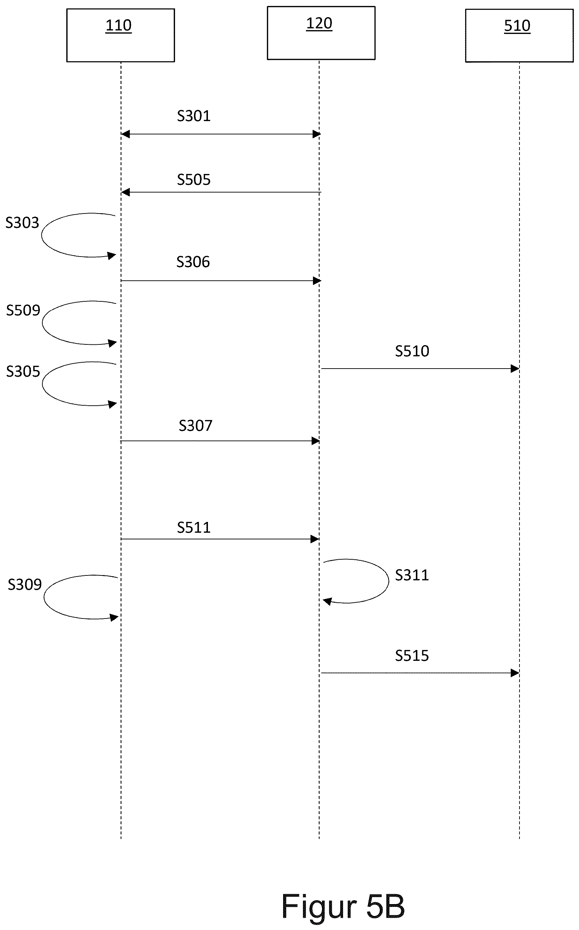

Die Figuren 5A und 5B zeigen jeweils Ablaufdiagramme von Verfahren zum digitalen Signieren von Daten unter Verwendung der Chipkarte 110.

Das in Figur 5A gezeigte Verfahren kann im Anschluss an das in Figur 3 gezeigte Verfahren durchgeführt werden.

Hierbei wird zunächst, analog zu dem Verfahren aus Figur 4, in Schritt S501 erneut ein sicherer Kanal 101 zwischen dem Endgerät 120 und der Chipkarte 110 aufgebaut. Dies kann beispielsweise durch die Eingabe eines Benutzers am Endgerät 120 initiiert werden.

Nach dem Aufbau des sicheren Kanals 101 zwischen dem Endgerät 120 und der Chipkarte 110 überträgt das Endgerät 120 unter Verwendung des sicheren Kanals in Schritt S503 den Kapselschlüssel 1142 an die Chipkarte und in Schritt S505 überträgt das Endgerät 120 über den sicheren Kanal die zu signierenden Daten an die Chipkarte 110.

In Schritt S507 wird der empfangene Kapselschlüssel 1142 von der Chipkarte 110 unter Verwendung des Verkapselungsschlüssels 1131, der im sicheren Speicher 113 der Chipkarte 110 gespeichert ist, entkapselt. Der durch das Entkapseln des Kapselschlüssels 1142 reproduzierte private Nutzschlüssel 1141 kann dann in Schritt S509 von der Chipkarte verwendet werden um die zu signierenden Daten zu signieren.

Alternativ zum Signieren von Daten die vom Endgerät übertragen wurden, können auch Daten der Chipkarte 110, bspw. persönliche Daten des Nutzers, in Schritt S509 signiert werden.

Die signierten Daten werden dann in Schritt S511 von der Chipkarte 110 über den sicheren Kanal 101 an das Endgerät 120 übertragen. Nach dem Übertragen der signierten Daten an das Endgerät 120 wird in Schritt S513 der Arbeitsspeicher 114 der Chipkarte 110 gelöscht. Weiterhin kann das Endgerät 120 in einem weiteren Schritt S515 die signierten Daten an ein weiteres, externes Computersystem 510 übertragen. Ein Nutzer des externen Computersystems 510 kann die Signatur dann unter Verwendung des öffentlichen Nutzschlüssels überprüfen. Der öffentliche Nutzschlüssel kann zu diesem Zweck bereits vorher an das externe Computersystem 510 übertragen worden sein, bzw. kann der öffentliche Nutzschlüssel an geeigneter Stelle zum Download durch das externe Computersystem 510 bereitgestellt sein.

Alternativ zu dem in Figur 5A gezeigten Verfahren zum digitalen Signieren, welches nach Abschluss des Verfahrens aus Figur 3 durchgeführt werden kann, ist es auch möglich, die Erzeugung der verwendeten Schlüssel und Signatur von Daten innerhalb eines Verfahrens durchzuführen, ohne zwischendurch den Arbeitsspeicher 114 zu löschen und eine erneute Verbindung zwischen Endgerät 120 und Chipkarte 110 aufzubauen.

Ein solches Verfahren wird im Kontext von Figur 5B beschrieben. Nach dem Aufbau des gesicherten Kanals 101 in Schritt S301 werden in Schritt S505 die zu signierenden Daten vom Endgerät 120 an die Chipkarte 110 übertragen. Alternativ können als zu signierende Daten auch im Speicher 113 der Chipkarte 110 bereits vorhandene Daten verwendet werden. Wie bereits bei Figur 3 beschrieben, wird in Schritt S303 ein asymmetrisches Schlüsselpaar bestehend aus einem privaten Nutzschlüssel 1141 und einem öffentlichen Nutzschlüssel generiert und der öffentliche Nutzschlüssel wird in Schritt S306 von der Chipkarte 110 über den sicheren Kanal an das Endgerät 120 übertragen. Der öffentliche Nutzschlüssel kann dann in Schritt S510 an das externe Computersystem 510 übertragen werden oder an einem geeigneten Ort zum Download zur Verfügung gestellt werden.

Die zu signierenden Daten werden dann in Schritt S509 durch den privaten Nutzschlüssel 1141 signiert und in Schritt S305 wird der private Nutzschlüssel 1141 durch den Verkapselungsschlüssel verkapselt bzw. verschlüsselt.

Der verkapselte private Nutzschlüssel, auch als Kapselschlüssel 1142 bezeichnet, wird in Schritt S307 über den sicheren Kanal an das Endgerät 120 übertragen und vom Endgerät 120 in Schritt S311 gespeichert, wie oben bereits beschrieben.

Außerdem werden in Schritt S511 die signierten Daten zunächst an das Endgerät übertragen und dann in Schritt S515 vom Endgerät an das externe Computersystem, welches die Signatur unter Verwendung des öffentlichen Nutzschlüssels überprüfen kann.

Wie auch im Verfahren aus Figur 3, werden am Ende in Schritt S309 die Daten vom Arbeitsspeicher 114 der Chipkarte 110 gelöscht.

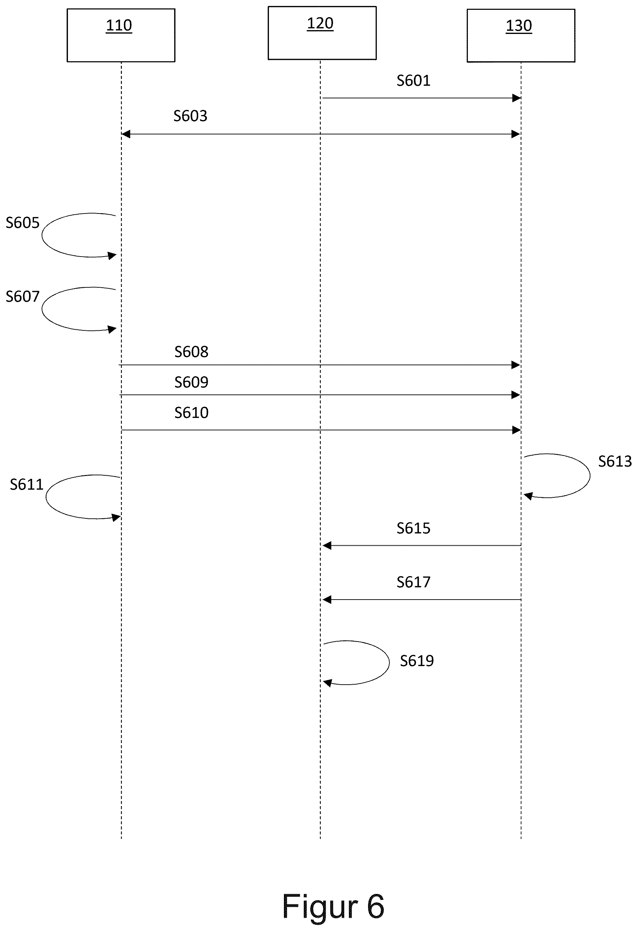

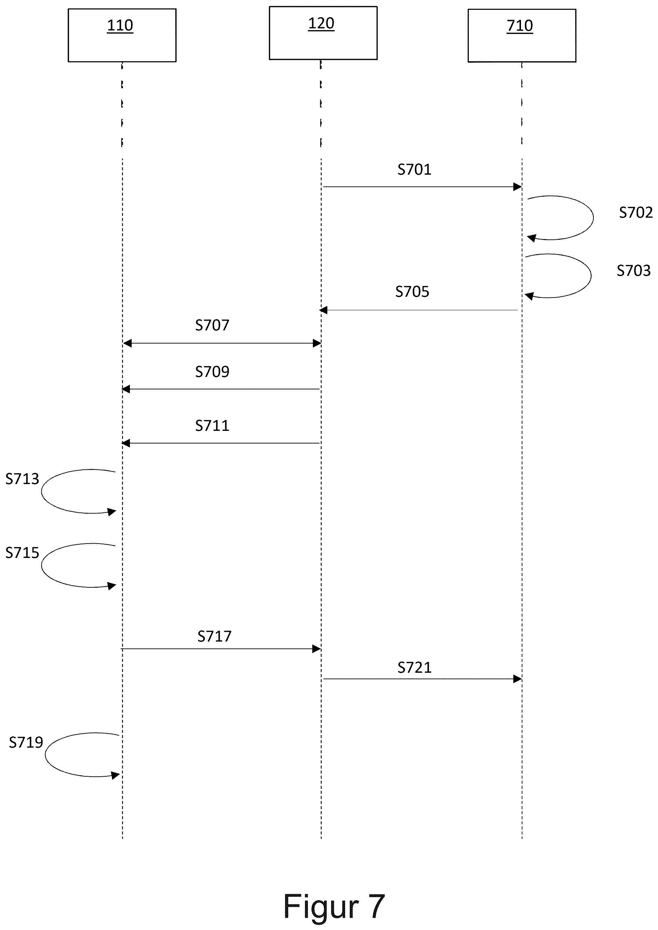

Figuren 6 und 7 beschreiben weiterhin ein auf den Prinzipien des erfindungsgemäßen Verfahrens basierendes Verfahren zur Erstellung einer zertifizierten Kennung eines Nutzers unter Verwendung einer Chipkarte 110 sowie ein Verfahren zur Überprüfung der Identität des Nutzers unter Verwendung der erzeugten zertifizierten Kennung.

In Figur 6 wird ein Verfahren zur Erstellung einer zertifizierten Kennung dargestellt, wobei hierzu eine Zertifizierungsvorrichtung, auch als Zertifikatsserver 130 bezeichnet verwendet wird.

Der Zertifikatsserver 130 kann, nachdem im Schritt S601 eine entsprechende Aufforderung durch das Endgerät 120 erfolgt ist, in Schritt S603 einen sicheren Kanal 101, 102 mit der Chipkarte 110 unter Verwendung der Schnittstelle 122, 126 des Endgeräts 120 herstellen. Ein derartiger sicherer Kanal 101, 102 kann beispielsweise durch das EAC Protokoll hergestellt werden und wird z.B. im Rahmen der eID Funktion der AusweisApp implementiert.

Nachfolgend wird in Schritt S605 zunächst ein asymmetrisches Schlüsselpaar erzeugt und in Schritt S607 wird der private Nutzschlüssel unter Verwendung des Verkapselungsschlüssels 1131 verkapselt. Weiterhin wird in Schritt S608 der öffentliche Nutzschlüssel und in Schritt S609 der Kapselschlüssel 1142 über den sicheren Kanal 101, 102 an den Zertifikatsserver 130 übertragen.

Zusätzlich überträgt die Chipkarte 110 in Schritt S610 noch Identitätsdaten der Chipkarte 110, beispielsweise den Namen, das Geburtsdatum, die Adresse oder die Seriennummer der Chipkarte 110. Je nachdem, welche Identitätsdaten in der zertifizierten Kennung enthalten sein sollen können unterschiedliche Identitätsdaten von der Chipkarte übertragen werden. Nach dem Übertragen aller Daten von der Chipkarte 110 an den Zertifikatsserver 130 werden in Schritt S611 die Daten des Arbeitsspeichers der Chipkarte 110 gelöscht.

Der Zertifikatsserver 130 ist hierbei vorzugsweise ein Server der hohe Sicherheitsanforderungen entspricht, beispielweise ein Server der Public Key Infrastructure.

Der Zertifikatsserver 130 erzeugt in Schritt S613 eine zertifizierte Kennung, die zumindest einen Teil der Identitätsdaten, den öffentlichen Nutzschlüssel und eine durch den Zertifikatsserver 130 erstellte Zertifizierung umfasst. Die Zertifizierung stellt sicher, dass die zertifizierte Kennung tatsächlich von dem Zertifikatsserver erstellt wurde. Beispielsweise kann die zertifizierte Kennung die Identitätsdaten, den öffentlichen Schlüssel, sowie eine unter Verwendung des Zertifikats des Zertifikatsservers 130 erstellte Signatur umfassen. Diese zertifizierte Kennung wird dann in Schritt S615 an das Endgerät 120 übertragen. Ebenso wird der Kapselschlüssel 1142 in Schritt S617 an das Endgerät übertragen. Alternativ kann der Kapselschlüssel auch direkt von der Chipkarte 110 an das Endgerät übertragen werden.

Hierzu sollte aber ein sicherer Kanal 101 zwischen der Chipkarte 110 und dem Endgerät 120 bestehen.

Weiterhin werden in Schritt S619 die empfangenen Daten im Endgerät 120 oder in einem dem Endgerät 120 zugeordneten Speicher 123 gespeichert.

Am Ende des Verfahrens aus Figur 6 ist im Speicher 123 des Endgeräts 120 die zertifizierte Kennung gespeichert, die die Identitätsdaten der Chipkarte mit dem Zertifikat des Zertifikatsservers und dem öffentlichen Nutzschlüssel verknüpft.

Im Verfahren, das in Figur 7 gezeigt wird kann dann die gespeicherte zertifizierte Kennung verwendet werden, um die Identitätsdaten gegenüber einem Dienstanbieter unter Verwendung der Chipkarte zu bestätigen. Dies ist insbesondere ohne eine Verbindung zum Zertifikatsserver möglich. Somit kann das nachfolgend beschriebene Verfahren beispielsweise zum Einsatz kommen, um gegenüber einem Computersystem 710 eines Dienstanbieters die Identität des Benutzers nachzuweisen, auch wenn der Dienstanbieter selber nicht über einen Zugang zur PKI verfügt.

Hierzu wird zunächst in Schritt S701 die zertifizierte Kennung vom Endgerät 120 an das Computersystem 710 des Dienstanbieters übertragen.

Der Dienstanbieter 710 verifiziert dann in Schritt S702 die zertifizierte Kennung und erstellt in Schritt S703 unter Verwendung der zertifizierten Kennung, insbesondere unter Verwendung des in der zertifizierten Kennung enthaltenen öffentlichen Schlüssels, Verifizierungsdaten, die der Challenge eines Challenge-Response-Protokolls entsprechen können.

Die Verifizierung der zertifizierten Kennung in Schritt S702 ermöglicht es dem Dienstanbieter 710 zu verifiziere, dass die zertifizierte Kennung tatsächlich von dem Zertifikatsserver 130 erstellt wurde. Dies ist ohne direkte Verbindung zum Zertifikatsserver 130 möglich und benötigt lediglich den zum Zertifikat des Zertifikatsservers 130 gehörenden öffentlichen Schlüsseln. Diese sind bei Zertifikatsservern der PKI Infrastruktur beispielsweise öffentlich verfügbar.

Die Verifizierungsdaten werden dann in Schritt S705 an das Endgerät 120 übertragen. Das Computersystem 710 des Dienstanbieters kann auch als zweites Computersystem oder "Relying Party" bezeichnet werden.

Das Endgerät 120 baut in Schritt S707 einen sicheren Kanal 101 zur Chipkarte 110 auf, beispielsweise unter Verwendung des PACE Protokolls. Hierbei wird vorzugsweise eine PIN oder ein Passwort durch den Nutzer eingegeben, um die Chipkarte 110 zu entsperren. Anschließend überträgt das Endgerät 120 über den sicheren Kanal 101 in Schritt S709 die Verifizierungsdaten und in Schritt S 711 den Kapselschlüssel 1142.

Die Chipkarte kann nun in Schritt S713 den Kapselschlüssel entkapseln, wie oben beschrieben und dann den rekonstruierten privaten Nutzschlüssel verwenden, um in Schritt S715 einen Beweis der Identität zu erstellen. Dies entspricht der "Response" eines verwendeten Challenge-Response-Protokolls. Hierdurch weist der Nutzer der Chipkarte 110 nach, dass er im Besitz der Chipkarte 110 ist, mit der in der zertifizierten Kennung enthaltene öffentlichen Nutzschlüssel erzeugt wurde. Der Beweis der Identität wird dann von oder Chipkarte 110 in Schritt S717 an das Endgerät 120 übertragen und in Schritt S721 vom Endgerät an das Computersystem des Diensteanbieters 710.

Hierdurch kann die Identität des Benutzers verifiziert werden, ohne dass der Dienstanbieter selber Zugriff auf die Daten der Chipkarte 110 erhält. Weiterhin ist es nicht notwendig, dauerhaft Daten der Kennung auf der Chipkarte 110 abzuspeichern, so dass die Ressourcen der Chipkarte 110 geschont werden.

Wie bereits im Zusammenhang mit anderen Verfahren beschrieben, werden nach Übersendung der Daten von der Chipkarte 110 an das Endgerät die Daten des Arbeitsspeichers 114 der Chipkarte 110 in einem Schritt S719 gelöscht.

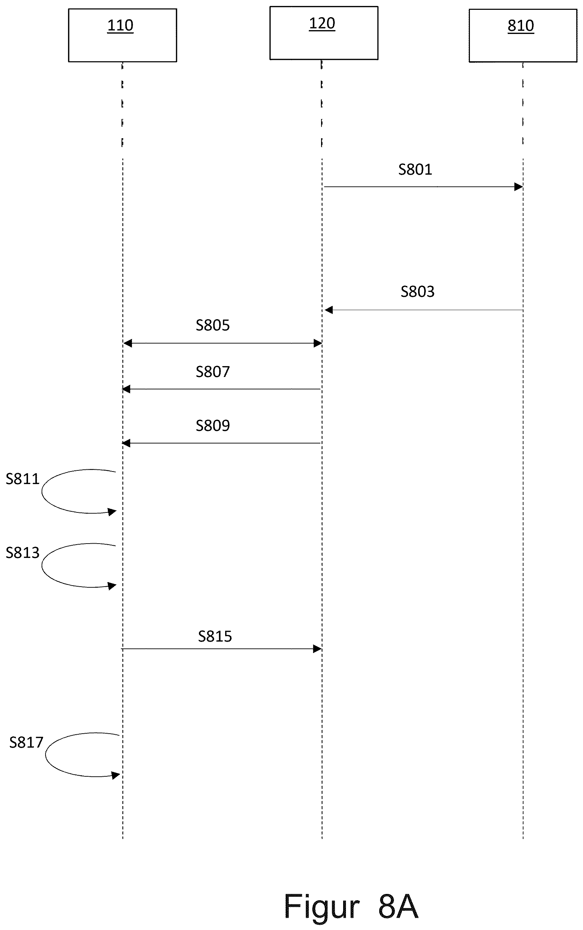

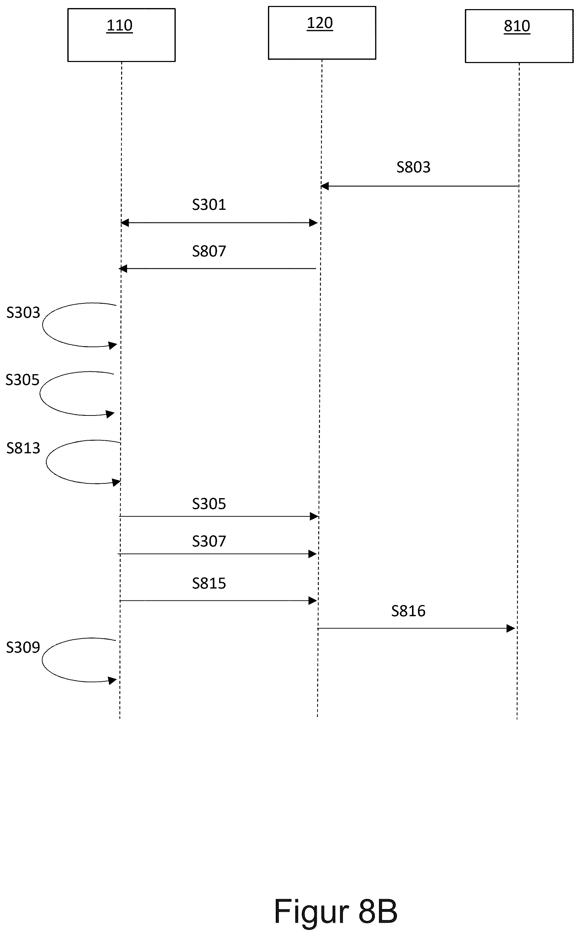

Die Figuren 8A und 8B zeigen jeweils Ablaufdiagramme von Verfahren zur Schlüsseleinigung unter Verwendung der Chipkarte 110.

Das in Figur 8A gezeigte Verfahren kann im Anschluss an das in Figur 3 gezeigte Verfahren durchgeführt werden.

Hierzu wird von einem weiteren Computersystem 810, welches in einem Schritt S801 einen öffentlichen Nutzschlüssel oder eine zertifizierte Kennung des Endgeräts 120 oder eines zugeordneten ersten Computersystems empfangen hat, in einem Schritt S803 eine Schlüsseleinigungsinformation an das Endgerät 120 übertragen. Die Schlüsseleinigungsinformation kann beispielsweise einen öffentlichen Schlüssel des weiteren Computersystems 810 beinhalten.

Nach dem Erhalt der Schlüsseleinigungsinformation, und der damit verbundenen Aufforderung zur Erstellung eines Gemeinschaftsschlüssels, wird zwischen dem Endgerät 120 und der Chipkarte 110 in einem Schritt S805 ein erneuter sicherer Kanal aufgebaut. Über den sicheren Kanal wird dann in Schritt S807 die Schlüsseleinigungsinformation und in Schritt S809 der Kapselschlüssel von dem Endgerät an die Chipkarte 110 übertragen.

Die Chipkarte kann dann in Schritt S811 den Kapselschlüssel unter Verwendung des Verkapselungsschlüssels entkapseln und so den privaten Nutzschlüssel rekonstruieren. Unter Verwendung des privaten Nutzschlüssels und der Schlüsseleinigungsinformation des weiteren Computersystems 810 wird dann von der Chipkarte 110 in Schritt S813 ein Gemeinschaftsschlüssel berechnet, der in Schritt S815 an das Endgerät 120 übertragen wird. Der Gemeinschaftsschlüssel kann dann zur verschlüsselten Kommunikation mit dem weiteren Computersystem 810 verwendet werden.

Im Anschluss können die Daten des Arbeitsspeichers der Chipkarte 110 in Schritt S817 gelöscht werden.

Bei dem Verfahren aus Figur 8A ist weiterhin zu beachten, dass alternativ die Übertragung des öffentlichen Nutzschlüssels oder einer Kennung vom Endgerät 120 an das weitere Computersystem 810 in Schritt S801 auch zu einem anderen Zeitpunkt stattfinden kann. Das weitere Computersystem 810 benötigt diese Daten möglicherweise, um ebenfalls den Gemeinschaftsschlüssel zu berechnen, dies kann aber auch nach der Übersendung der Schlüsseleinigungsinformation an das Endgerät 120 oder das entsprechende erste Computersystem 140 erfolgen.

Figur 8B zeigt eine weitere Ausgestaltung eines Verfahrens zur Schlüsseleinigung, bei der die Schlüsseleinigung und die Erstellung des Gemeinschaftsschlüssels, in den bereits für Figur 3 beschriebenen Ablauf zum Schlüsselexport integriert ist. Somit wird bei der Ausgestaltung aus Figur 8B der sichere Kanal verwendet, der zum Schlüsselexport zwischen der Chipkarte 110 und dem Endgerät 120 bzw. dem Computersystem 140 aufgebaut wurde, es ist nicht notwendig einen erneuten sicheren Kanal aufzubauen.

Wie schon für Figur 8A beschrieben, empfängt das Endgerät in Schritt S803 eine Schlüsseleinigungsinformation eines weiteren Computersystems 810. Zwischen dem Endgerät S120 und der Chipkarte 110 wird dann mittels gegenseitiger Authentifizierung ein sicherer Kanal aufgebaut. Über diesen sicheren Kanal kann dann in Schritt S807 die Schlüsseleinigungsinformation an die Chipkarte 110 übertragen werden.

Die Chipkarte 110 für dann in Schritt S303 die Erstellung eines privaten Nutzschlüssels sowie eines dem privaten Nutzschlüssel zugeordneten öffentlichen Nutzschlüssels durch, wie an anderer Stelle dieser Anmeldung beschrieben. Der private Nutzschlüssel 1141 wird dann in Schritt S305 unter Verwendung des Verkapselungsschlüssels 1131 verkapselt, wodurch der Kapselschlüssel 1142 erstellt wird.

In Schritt S813 wird basierend auf dem privaten Nutzschlüssel 1141 und der Schlüsseleinigungsinformation ein Gemeinschaftsschlüssel erstellt, den dann in Schritt S815 an das Endgerät 120 übertragen wird. Das Endgerät und/oder das zugeordnete erste Computersystem 140 kann dann den Gemeinschaftsschlüssel verwenden, um Nachrichten für das weitere Computersystem 810 zu verschlüsseln bzw. um vom weiteren Computersystem 810 empfangene Nachrichten zu entschlüsseln.

Damit das weitere Computersystem 810 ebenfalls in die Lage versetzt wird, den Gemeinschaftsschlüssel zu berechnen, wird in Schritt S816 der öffentliche Nutzschlüssel vom Endgerät 120 an das weitere Computersystem 810 übertragen. Diese Übertragung des öffentlichen Nutzschlüssels oder einer den öffentlichen Nutzschlüssel enthaltenden Kennung kann auch indirekt erfolgen.

Eine andere Reihenfolge der Schritte ist auch möglich, außer in den Fällen wo durch einen Schritt erstellte Zwischenprodukte zwingend für einen weiteren Schritt benötigt werden.

Die bisher im Detail beschriebenen Verfahren beruhen alle auf der Verwendung eines asymmetrischen Schlüsselpaars, welches durch die Chipkarte 110 erzeugt wird. Es ist alternativ aber auch möglich, Chipkarten-basierte Verschlüsselung und Entschlüsselung unter Verwendung eines symmetrischen Schlüssels umzusetzen. Dies ist besonders im Kontext von Passwörtern oder anderen kurzen geheimen Daten, die durch eine Chipkarte abgesichert werden können, von Interesse.

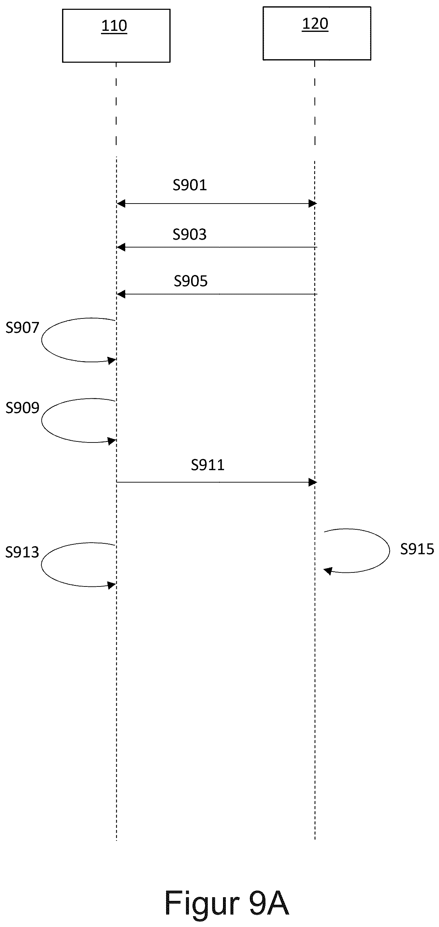

Hierfür kann, wie in Figur 9A gezeigt, im Anschluss an das Verfahren der Figur 2 erneut ein sicherer Kanal 101 zwischen Endgerät 120 und Chipkarte 110 aufgebaut in einem ersten Schritt S901 der Figur 9A. Hierzu kann beispielsweise das PACE Protokoll verwendet werden.

Über diesen sicheren Kanal 101 werden dann in Schritt S903 der zuvor anhand des Verfahrens aus Figur 2 erzeugte Kapselschlüssel 1442, welcher basierend auf einem symmetrischen Nutzschlüssel 1141 erzeugt wurde, an die Chipkarte 110 übersandt. Weiterhin werden die zu verschlüsselnden Daten in einem Schritt S905 vom Endgerät 120 an die Chipkarte 110 übersandt.

Die Chipkarte 110 kann nun in einem bereits beschriebenen Schritt S409 den Kapselschlüssel 1142 entkapselt unter Verwendung des Verkapselungsschlüssels 1131 und der so reproduzierte symmetrische Nutzschlüssel 1141 kann dann in Schritt S909 verwendet werden um die zu verschlüsselnden Daten zu verschlüsseln. Anschließend werden die verschlüsselten Daten in Schritt S911 von der Chipkarte 110 an das Endgerät 120 übertragen und das Endgerät 120 kann die verschlüsselten Daten im Schritt S915 in seinem Speicher ablegen. Weiterhin wird in Schritt S913 nach Übertragung der Daten von der Chipkarte 110 an das Endgerät 120 der Arbeitsspeicher 114 der Chipkarte 110 gelöscht.

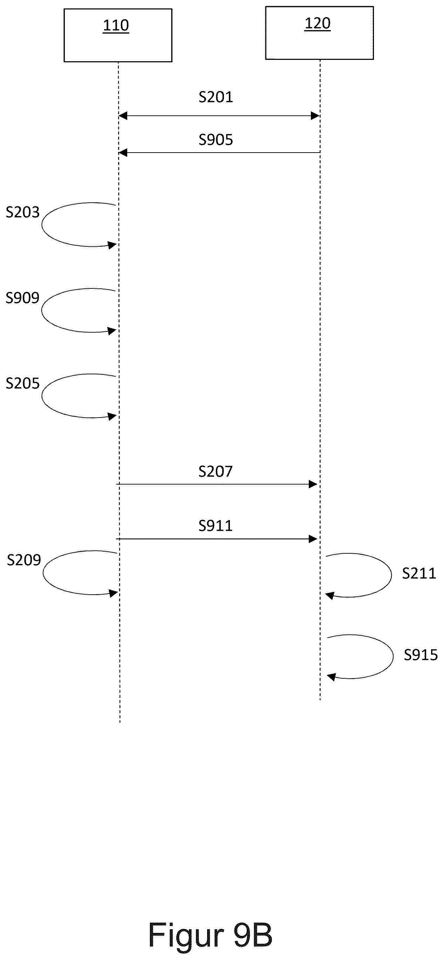

Alternativ zu einer Ausführung der symmetrischen Verschlüsselung nach der Ausführung des Verfahrens aus Figur 2 kann auch die symmetrische Verschlüsselung in Kombination, d.h. zeitgleich oder zumindest in enger zeitlicher Nähe, mit dem Verfahren aus Figur 2 durchgeführt werden, wie in Figur 9B beschrieben.

Das in Figur 9B gezeigte Verfahren kombiniert somit die Verfahren zum Schlüsselexport gemäß Figur 2 mit dem Verfahren zur Verschlüsselung mit einem symmetrischen Schlüssel gemäß Figur 9A.

Im Verfahren, das in Figur 9B gezeigt wird, wird zunächst in Schritt S201 ein gesicherter Kanal 101 zwischen der Chipkarte 110 und dem Endgerät 120 hergestellt. Danach werden die zu verschlüsselnden Daten vom Endgerät 120 an die Chipkarte 110 übertragen.

Die Chipkarte 110 ist dann konfiguriert in Schritt S203 einen symmetrischen Nutzschlüssel 1141 zu erzeugen, beispielsweise einen AES-256 Schlüssel unter Verwendung des Schlüsselgenerators 115 und Zufallszahlengenerators 1151 der Chipkarte 110.

Anschließend wird der generierte Nutzschlüssel 1141 in Schritt S909 verwendet um im Arbeitsspeicher 114 der Chipkarte 110 die übertragenen Daten mit dem generierten symmetrischen Nutzschlüssel 1141 zu verschlüsseln. Der symmetrische Nutzschlüssel 1141 wird dann in Schritt S205 unter Verwendung des Verkapselungsschlüssels 1131 verkapselt. Anschließend werden in Schritt S207 der verkapselte Nutzschlüssel, der auch als Kapselschlüssel 1142 bezeichnet wird, und in Schritt S911 die verschlüsselten Daten an das Endgerät 120 übertragen. In Schritt S209 wird der Arbeitsspeicher 114 der Chipkarte 110 gelöscht und das Endgerät 120 ist weiter konfiguriert sowohl in Schritt S211 den Kapselschlüssel 1142 als auch in Schritt S915 die verschlüsselten Daten zu speichern.

Durch die Verfahren aus Figur 9A und Figur 9B ist es somit möglich, kleine Datenmengen unter Verwendung einer Chipkarte zu verschlüsseln. Dies kann beispielsweise als Back-Up für Passwörter oder Zugangsdaten verwendet werden und könnte auch im Zusammenhang mit einer elektronischen Wallet oder elektronischem Schlüsselbund zum Einsatz kommen, wobei die Chipkarte dann die Funktion eines Masterkeys erhalten könnte. Hierdurch ist auch eine 2-Faktor-Authentifizierung realisiert, da zur Entschlüsselung sowohl Chipkarte als auch Endgerät vorliegen müssen.

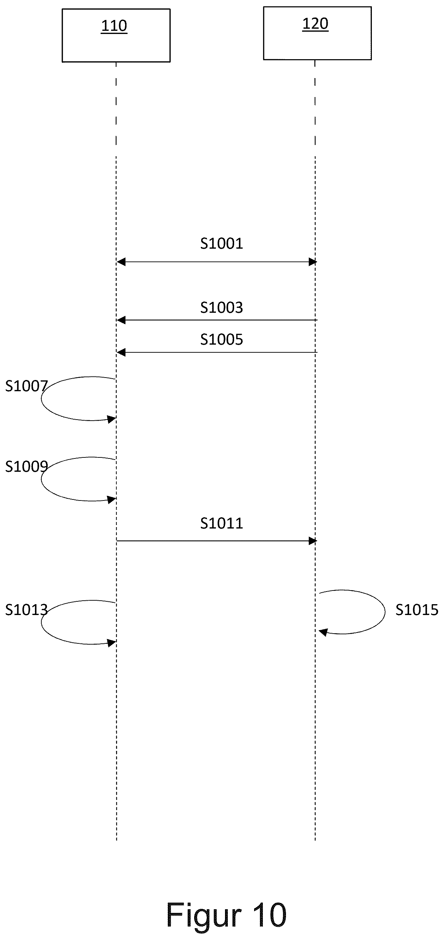

Weiterhin zeigt Figur 10 ein Verfahren zum Entschlüsseln von unter Verwendung eines der Verfahren aus Figur 9A oder 9B verschlüsselten Daten. Hierzu wird zunächst in Schritt S1001 ein erneuter sicherer Kanal zwischen der Chipkarte 110 und dem Endgerät 120 aufgebaut. Danach wird in Schritt S1003 der Kapselschlüssel 1142 vom Endgerät 120 an die Chipkarte 110 über den sicheren Kanal 101 übertragen und in Schritt S1005 werden verschlüsselten Daten vom Endgerät an die Chipkarte 110 übertragen.

Die Chipkarte 110 kann nun in Schritt S1007 den Kapselschlüssel 1142 unter Verwendung des Verkapselungsschlüssels 1131 entkapseln und dann den dadurch erhaltenen Nutzschlüssel 1141 verwenden um die verschlüsselten Daten in Schritt S1009 zu entschlüsseln. Die entschlüsselten Daten werden dann in Schritt S1011 an das Endgerät 120 übertragen, wo die Daten in Schritt S1015 gespeichert oder verwendet werden können. Außerdem wird der Arbeitsspeicher der Chipkarte in Schritt S1013 gelöscht.

Die beschriebenen Ausführungsformen diskutieren verschiedenen Varianten der Verwendung eines exportierten Schlüssels, der von einer Chipkarte erzeugt wurde und durch diese Chipkarte gesichert ist. Die beschriebenen Ausführungsformen können auch in anderer als den beschriebenen Kombinationen kombiniert werden und derartige Kombinationen der Ausführungsformen werden auch als vom Schutzumfang dieser Anmeldung umfasst angesehen.

### Bezugszeichenliste

- 100: Elektronisches System
- 101: Sicherer Kanal
- 102: Sicherer Kanal
- 110: Chipkarte
- 111: Prozessor der Chipkarte
- 112: Kommunikationsschnittstelle der Chipkarte
- 113: Speicher der Chipkarte
- 1131: Verkapselungsschlüssel
- 114: Arbeitsspeicher
- 1141: Nutzschlüssel
- 1142: Kapselschlüssel
- 115: Schlüsselgenerator
- 1151: Zufallszahlengenerator
- 120: Endgerät
- 121: Prozessor des Endgeräts
- 122: erste Kommunikationsschnittstelle des Endgeräts
- 123: Speicher des Endgeräts
- 126: zweite Kommunikationsschnittstelle des Endgeräts
- 130: Zertifikatsserver
- 131: Prozessor des Zertifikatsservers
- 133: Speicher des Zertifikatsservers
- 133: Zertifikat
- 136: Kommunikationsschnittstelle des Zertifikatsservers
- 140: Computersystem
- 200: Elektronisches System
- 410: weiteres Computersystem
- 510: weiteres Computersystem
- 710: Verifizierungseinrichtung
- 810: weiteres Computersystem

- S201: gegenseitige Authentisierung
- S203: Erstellung des Nutzschlüssels
- S205: Verkapselung des Nutzschlüssels
- S207: Übertragung des Kapselschlüssels von der Chipkarte an das Endgerät
- S209: Löschen des Arbeitsspeichers
- S211: Speichern der empfangenen Daten
- S301: gegenseitige Authentisierung
- S303: Erstellung des privaten und öffentlichen Nutzschlüssels
- S305: Verkapseln des privaten Nutzschlüssels
- S306: Übertragung des öffentlichen Nutzschlüssels
- S307: Übertragen des Kapselschlüssels von der Chipkarte an das Endgerät
- S309: Löschen des Arbeitsspeichers
- S311: Speichern der empfangenen Daten

- S401: Übertragen der verschlüsselten Daten
- S403: erneute gegenseitige Authentisierung
- S405: Übertragen des Kapselschlüssels vom Endgerät an die Chipkarte
- S407: Übertragen der verschlüsselten Daten
- S409: Entkapseln des Kapselschlüssels
- S411: Entschlüsseln der verschlüsselten Daten
- S413: Übertragen der entschlüsselten Daten
- S415: Löschen des Arbeitsspeichers

- S501: gegenseitige Authentifizierung
- S503: Übertragen des Kapselschlüssels
- S505: Übertragen der zu signierenden Daten
- S507: Entkapseln des Kapselschlüssels
- S509: Signieren der Daten
- S510: Übertragen des öffentlichen Schlüssels
- S511: Übertragen der signierten Daten von der Chipkarte
- S513: Löschen des Arbeitsspeichers
- S515: Übertragen der signierten Daten von dem Endgerät

- S601: Initiieren der Erstellung der zertifizierten Kennung
- S603: gegenseitige Authentisierung von Chipkarte und Zertifikatsserver
- S605: Erstellung des privaten und öffentlichen Nutzschlüssels
- S607: Verkapseln des privaten Nutzschlüssels
- S607: Übertragen des öffentlichen Nutzschlüssels
- S608: Übertragen des Kapselschlüssels
- S609: Übertragen von ID Daten
- S611: Löschen des Arbeitsspeichers
- S613: Erstellen der zertifizierten Kennung
- S615: Übertragen der zertifizierten Kennung an das Endgerät
- S617: Übertragen des Kapselschlüssels vom Zertifikatsserver an das Endgerät
- S619: Speichern der zertifizierten Kennung
- S701: Übertragen der Kennung vom Endgerät an die Verifizierungseinrichtung
- S703: Erstellen von Verifizierungsdaten
- S705: Übertragen der Verifizierungsdaten von der Verifizierungseinrichtung an das Endgerät
- S707: gegenseitige Authentifizierung
- S709: Übertragen der Verifizierungsdaten vom Endgerät an die Chipkarte
- S711: Übertragen des Kapselschlüssels vom Endgerät an die Chipkarte
- S713: Entkapseln des Kapselschlüssels
- S715: Erzeugen des Beweises der Verifizierungsdaten
- S717: Übertragen des Beweises von der Chipkarte an das Endgerät
- S719: Löschen des Arbeitsspeichers
- S721: Übertragen des Beweises vom Endgerät an die Verifizierungseinrichtung

- S801: Übertragen des öffentlichen Schlüssels an ein weiteres Computersystem
- S803: Übertragung der Schlüsseleinigungsinformation an das Endgerät
- S805: gegenseitige Authentifizierung
- S807: Übertragen der Schlüsseleinigungsinformation an die Chipkarte
- S809: Übertragen des Kapselschlüssels an die Chipkarte
- S811: Entkapseln des Kapselschlüssels
- S813: Erzeugen des Gemeinschaftsschlüssels
- S815: Übertragen des Gemeinschaftsschlüssels an das Endgerät
- S817: Löschen des Arbeitsspeichers

- S901: gegenseitige Authentifizierung
- S903: Übertragen des Kapselschlüssels vom Endgerät an die Chipkarte
- S905: Übertragen der Daten
- S907: Entkapseln des Kapselschlüssels
- S909: Verschlüsseln der Daten
- S911: Übertragen der verschlüsselten Daten
- S913: Löschen des Arbeitsspeichers
- S915: Speichern der verschlüsselten Daten

- S1001: gegenseitige Authentifizierung
- S1003: Übertragen des Kapselschlüssels an die Chipkarte
- S1005: Übertragen der verschlüsselten Daten
- S1007: Entkapseln des Kapselschlüssels
- S1009: Entschlüsseln der verschlüsselten Daten
- S1011: Übertragen der entschlüsselten Daten
- S1013: Löschen des Arbeitsspeichers
- S1015: Speichern oder Verwenden der entschlüsselten Daten

## Patentansprüche

1. Verfahren zum Exportieren eines von einem ID Token (110) erzeugten Schlüssels, das Verfahren umfassend die folgenden Schritte:
- Aufbauen (S201) eines sicheren Kanals (101, 102) zwischen einem ersten Computersystem (140) und dem ID Token (110);
- Erzeugen (S203) oder Importieren eines Nutzschlüssels (1141) durch das ID Token (110);
- Erzeugen (S205) eines Kapselschlüssels (1142) durch das ID Token (110), wobei der Kapselschlüssel (1142) erzeugt wird durch Verschlüsselung des vom ID Token (110) generierten Nutzschlüssels (1141) mit einem in einem sicheren Speicherbereich (113) des ID Tokens (110) gespeicherten Verkapselungsschlüssel (1131);
- Exportieren (S207) des Kapselschlüssels (1142) von dem ID Token (110) an das erste Computersystem (140).

2. Verfahren gemäß Anspruch 1, wobei das ID Token (110) eine Chipkarte (110) oder ein digitales Sicherheitsdokument ist und/oder
wobei das Erzeugen (S203) des Nutzschlüssels (1141) und das Erzeugen (S205) des Kapselschlüssels (1142) im Arbeitsspeicher (114) des ID Tokens (110) durchgeführt wird, das Verfahren weiterhin umfassend, nach dem Exportieren (S207) des Kapselschlüssels (1142) an das erste Computersystem (140):
- Löschen (S209) des Nutzschlüssels (1141) und des Kapselschlüssels (1142) aus dem Arbeitsspeicher (114) des ID Tokens (110).

3. Verfahren gemäß einem der vorhergehenden Ansprüche, wobei der Nutzschlüssel (1141) ein privater Nutzschlüssel eines asymmetrischen Schlüsselpaars ist, das Verfahren weiterhin umfassend
- Erzeugen (S303), durch das ID Token (110), eines dem privaten Nutzschlüssel zugeordneten öffentlichen Nutzschlüssels;
- Exportieren (S306) des öffentlichen Nutzschlüssels an das erste Computersystem (140).

4. Verfahren gemäß Anspruch 3, das Verfahren weiterhin umfassend, nach dem Exportieren des Kapselschlüssels (1142) von dem ID Token (110) an das erste Computersystem (140), die folgenden Schritte:
- Empfangen (S401), durch das erste Computersystem (140), von unter Verwendung des öffentlichen Nutzschlüssels verschlüsselten digitalen Daten;
- Aufbauen (S403) eines erneuten sicheren Kanals (101, 102) zwischen dem ersten Computersystem (140) und dem ID Token (110);
- Exportieren (S405, S407) der verschlüsselten digitalen Daten und des Kapselschlüssels (1142) vom ersten Computersystem (140) an das ID Token (110);
- Entkapseln (S409), durch das ID Token (110), des Kapselschlüssels (1142) unter Verwendung des Verkapselungsschlüssels (1131);
- Entschlüsseln (S411), durch das ID Token (110), der verschlüsselten digitale Daten unter Verwendung des entkapselten privaten Nutzschlüssels;
- Exportieren (S413), von dem ID Token (110) an das erste Computersystem (140) über den sicheren Kanal (101, 102), der entschlüsselten digitalen Daten.

5. Verfahren gemäß Anspruch 3, das Verfahren weiterhin umfassend, nach dem Exportieren (S207) des Kapselschlüssels (1142) von dem ID Token (110) an das erste Computersystem (140), die folgenden Schritte:
- Aufbauen (S501) eines erneuten sicheren Kanals (101, 102) zwischen einem ersten Computersystem (140) und dem ID Token (110);
- Exportieren (S503) des Kapselschlüssels (1142) vom ersten Computersystem (140) an das ID Token (110);
- Exportieren (S505) digitaler Daten von dem ersten Computersystem (140) an das ID Token (110);
- Entkapseln (S507), durch das ID Token (110), des Kapselschlüssels (1142) unter Verwendung des Verkapselungsschlüssels (1131);
- Signieren (S509), durch das ID Token (110), der digitalen Daten unter Verwendung des entkapselten privaten Nutzschlüssels;
- Exportieren (S511) der signierten digitalen Daten an das erste Computersystem (140);
- Übermitteln der signierten digitalen Daten und des öffentlichen Nutzschlüssels an ein weiteres Computersystem (510).

6. Verfahren gemäß Anspruch 3, das Verfahren weiterhin umfassend, nach dem Aufbauen (S301) des sicheren Kanals (101, 102) zwischen dem ersten Computersystem (140) und dem ID Token (110):
- Exportieren (S505) digitaler Daten von dem ersten Computersystem (140) an das ID Token (110); und,
das Verfahren weiterhin umfassend, nach dem Erzeugen des privaten Nutzschlüssels durch das ID Token (110):
- Signieren (S509), durch das ID Token (110), der digitalen Daten unter Verwendung des privaten Nutzschlüssels;
- Exportieren (S511) der signierten digitalen Daten an das erste Computersystem (140);
- Übermitteln der signierten digitalen Daten und des öffentlichen Nutzschlüssels an ein weiteres Computersystem (510).

7. Verfahren gemäß Anspruch 3, das Verfahren weiterhin umfassend:
- Empfangen, durch das erste Computersystem (140), von Schlüsseleinigungsinformation eines weiteren Computersystems (810);
- Aufbauen (S805) eines erneuten sicheren Kanals zwischen dem ID Token (110) und dem ersten Computersystem (140);
- Exportieren (S807, S809) der Schlüsseleinigungsinformation und des Kapselschlüssels (1142) vom ersten Computersystem (120, 140) an das ID Token (110);
- Entkapseln (S811), durch das ID Token (110), des Kapselschlüssels (1142);
- Erzeugen (S813), durch das ID Token (110), eines Gemeinschaftsschlüssels unter Verwendung des privaten entkapselten Nutzschlüssels und der Schlüsseleinigungsinformation;
- Exportieren (S815) des Gemeinschaftsschlüssels vom ID Token (110) an das erste Computersystem (140).

8. Verfahren gemäß Anspruch 3, das Verfahren weiterhin umfassend
- Empfangen, durch das erste Computersystem (140), von Schlüsseleinigungsinformation eines weiteren Computersystems (810);
das Verfahren weiterhin umfassend, nach dem Aufbauen (S301) des sicheren Kanals (101, 102) zwischen dem ersten Computersystem (140) und dem ID Token (110):
- Exportieren (S807) der Schlüsseleinigungsinformation von dem ersten Computersystem (140) an das ID Token (110); und;
das Verfahren weiterhin umfassend, nach dem Erzeugen des privaten Nutzschlüssels durch das ID Token (110):
- Erzeugen (S813), durch das ID Token (110), eines Gemeinschaftsschlüssels unter Verwendung des privaten Nutzschlüssels und der Schlüsseleinigungsinformation;
- Exportieren (S815) des Gemeinschaftsschlüssels vom ID Token (110) an das erste Computersystem (140).

9. Verfahren gemäß einem der Ansprüche 3 bis 8, wobei das erste Computersystem (140) eine Nutzervorrichtung (120) und eine Zertifizierungsvorrichtung (130) umfasst, die Nutzervorrichtung (120) umfassend eine Kommunikationsschnittstelle (122) zum Datenaustausch mit dem ID Token (110), die Zertifizierungsvorrichtung (130) umfassend ein Zertifikat (1331), wobei das Aufbauen des sicheren Kanals (101, 102) zwischen dem ersten Computersystem (140) und dem ID Token (110) die folgenden Schritte umfasst:
- Aufbauen (S603) des sicheren Kanals (101, 102) zwischen der Zertifizierungsvorrichtung (130) und dem ID-Token (110) unter Verwendung der Kommunikationsschnittstelle der Nutzervorrichtung (120).

10. Verfahren gemäß Anspruch 9, wobei das Exportieren des Kapselschlüssels (1142) und des öffentlichen Nutzschlüssels an das erste Computersystem (140) insbesondere umfasst:
- Exportieren (S608, S609, S610) des Kapselschlüssels (1142), des öffentlichen Nutzschlüssels und von Identitätsdaten von dem ID Token (110) an die Zertifizierungsvorrichtung (130) über den sicheren Kanal (101, 102);
- Erstellen (S613), durch die Zertifizierungsvorrichtung (130), einer zertifizierten Kennung basierend auf dem öffentlichen Nutzschlüssel, den Identitätsdaten und dem Zertifikat (1331) der Zertifizierungsvorrichtung (130); und
- Übermitteln (S615), von der Zertifizierungsvorrichtung (130) an die Nutzervorrichtung (120), der zertifizierten Kennung und des Kapselschlüssels (1142).

11. Verfahren zur Nutzerauthentisierung gegenüber einem zweiten Computersystem (710), das Verfahren umfassend die folgenden Schritte:
- Übermitteln (S701) der gemäß Anspruch 10 erstellten zertifizierten Kennung von der Nutzervorrichtung (120) an das zweite Computersystem ();
- Empfangen (S705), durch die Nutzervorrichtung (120), von Verifizierungsdaten, wobei die Verifizierungsdaten durch das zweite Computersystem () unter Verwendung der übermittelten zertifizierten Kennung erstellt und an die Nutzervorrichtung () übermittelt wurden;
- Aufbauen (S707) eines sicheren Kanals (101) zwischen der Nutzervorrichtung (120) und dem ID Token (110);
- Exportieren (S709, S711) der Verifizierungsdaten und des Kapselschlüssels (1142) von der Nutzervorrichtung (120) an das ID Token (110);
- Entkapseln (S713), durch das ID Token (110), des Kapselschlüssels (1142) unter Verwendung des Verkapselungsschlüssels (1131);
- Erstellen (S715), durch das ID Token (110), eines Beweises der Identität auf Basis der Verifizierungsdaten und des entkapselten privaten Nutzschlüssels;
- Exportieren (S717) des Beweises der Identität von dem ID Token (110) an die Nutzervorrichtung (120); und
- Übermitteln (S721) des Beweises der Identität von der Nutzervorrichtung (120) an das zweite Computersystem (710).

12. Verfahren gemäß einem der Ansprüche 1 bis 2, wobei der erzeugte Nutzschlüssel (1141) ein symmetrischer Nutzschlüssel ist, das Verfahren weiterhin umfassend, nach dem Exportieren des Kapselschlüssels (1142) von dem ID Token (110) an das erste Computersystem (140), die folgenden Schritte:
- Aufbauen (S901) eines erneuten sicheren Kanals (101) zwischen dem ersten Computersystem (140) und dem ID Token (110);
- Exportieren (S903) des Kapselschlüssels (1142) vom ersten Computersystem (140) an das ID Token (110);
- Exportieren (S905) digitaler Daten von dem ersten Computersystem (140) an das ID Token (110);
- Entkapseln (S907), durch das ID Token (110), des Kapselschlüssels (1142) unter Verwendung des Verkapselungsschlüssels (1131);
- Verschlüsseln (S909), durch das ID Token (110), der digitalen Daten unter Verwendung des entkapselten Nutzschlüssels (1141);
- Exportieren (S911) der verschlüsselten digitalen Daten an das erste Computersystem (140).

13. Verfahren gemäß einem der Ansprüche 1 bis 2, wobei der erzeugte Nutzschlüssel (1141) ein symmetrischer Nutzschlüssel ist, das Verfahren weiterhin umfassend, nach dem Aufbauen (S201) des sicheren Kanals (101) zwischen dem ersten Computersystem (140) und dem ID Token (110):
- Exportieren (S905) digitaler Daten von dem ersten Computersystem (140) an das ID Token (110);
und das Verfahren weiterhin umfassend, nach dem Erzeugen des Nutzschlüssels (1141) durch das ID Token (110):
- Verschlüsseln (S909), durch das ID Token, der digitalen Daten unter Verwendung des erzeugten Nutzschlüssels (1141);
- Exportieren (S911) der verschlüsselten digitalen Daten an das erste Computersystem (140).

14. Verfahren gemäß Anspruch 12 oder 13, das Verfahren weiterhin umfassend:
- Aufbauen (S1001) eines erneuten sicheren Kanals (101) zwischen dem ID Token (110) und dem ersten Computersystem (140);
- Exportieren (S1003, S1005), durch das erste Computersystem (140), des Kapselschlüssels (1142) und der verschlüsselten digitalen Daten an das ID Token (110);
- Entkapseln (S1007), durch das ID Token (110), des Kapselschlüssels (1142) unter Verwendung des Verkapselungsschlüssels (1131);
- Entschlüsseln (S1009), durch das ID Token (110), der verschlüsselten digitalen Daten unter Verwendung des entkapselten Nutzschlüssels (1141);
- Exportieren (S1011) der entschlüsselten digitalen Daten an das erste Computersystem (140).

15. Elektronisches System (100, 200) zum Exportieren eines von einem ID Token (110) erzeugten Schlüssels, das System umfassend ein ID Token (110) und ein erstes Computersystem (140),
das ID Token (110) umfassend einen in einem sicheren Speicherbereich (113) gespeicherten Verkapselungsschlüssel (1131), das ID Token (110) konfiguriert zum
- Aufbauen (S201, S301) eines sicheren Kanals (101, 102) zu dem ersten Computersystem (140);
- Erzeugen (S203, S303) oder Importieren eines Nutzschlüssels (1141);
- Erzeugen (S205, S305) eines Kapselschlüssels (1142) durch Verschlüsseln des Nutzschlüssels (1141) mit dem Verkapselungsschlüssel (1131); und
- Exportieren (S207, S307) des Kapselschlüssels (1141) an das erste Computersystem (140);
das erste Computersystem (140) konfiguriert zum
- Aufbauen (S201, S301) eines sicheren Kanals (101, 102) zu dem ID Token (110);
- Empfangen (S207, S307) des Kapselschlüssels (1142) über den sicheren Kanal (101, 102) von dem ID Token (110); und
- Speichern (S211, S311) des Kapselschlüssels (1142).
